(19) **Europäisches Patentamt / European Patent Office / Office européen des brevets**

(11) **EP 3 069 295 B1**

(12) **EUROPEAN PATENT SPECIFICATION**

(45) Date of publication and mention
of the grant of the patent:
**05.08.2020  Bulletin 2020/32**

(51) Int Cl.:
**G06K 9/00** *(2006.01)*    **G06K 9/20** *(2006.01)*
**G06K 9/62** *(2006.01)*

(21) Application number: **14799424.8**

(22) Date of filing: **14.11.2014**

(86) International application number:
**PCT/EP2014/074687**

(87) International publication number:
**WO 2015/071442 (21.05.2015 Gazette 2015/20)**

(54) **IMAGE ANALYSIS FOR AUTHENTICATING A PRODUCT**

BILDANALYSE ZUR AUTHENTIFIZIERUNG EINES PRODUKTS

ANALYSE D'IMAGE POUR L'AUTHENTIFICATION D'UN PRODUIT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.11.2013  PCT/EP2013/073889
15.11.2013  US 201361904649 P**

(43) Date of publication of application:
**21.09.2016  Bulletin 2016/38**

(73) Proprietor: **SICPA HOLDING SA
1008 Prilly (CH)**

(72) Inventors:
• **CALLEGARI, Andrea
CH-1022 Chavannes-près-Renens (CH)**
• **PHAM, Huu Duc Christophe
CH-1008 Prilly (CH)**
• **BERTHIER, Yves
F-25370 Metabief (FR)**
• **CHEVALLIER, Gatien
CH-2035 Corcelles-Cormondrèche (CH)**

• **ESTERMANN, Eric
CH-1020 Renens (CH)**
• **QAYOOM, Aamir
CH-1213 Petit-Lancy (CH)**
• **GILLIERON, Mathieu
CH-1304 Senarclens (CH)**
• **BRODARD, Yves
CH-1630 Bulle (CH)**

(74) Representative: **Carvajal y Urquijo, Isabel et al
Clarke, Modet & Co.
Suero de Quiñones, 34-36
28002 Madrid (ES)**

(56) References cited:
EP-A2- 1 143 375        WO-A1-02/01513
US-A1- 2009 028 424     US-A1- 2009 141 984
US-A1- 2012 076 422     US-A1- 2013 004 079

• **Shungang Hua ET AL: "Similarity measure for
image resizing using SIFT feature", EURASIP
Journal on Image and Video Processing, vol.
2012, no. 1, 1 December 2012 (2012-12-01),
XP055561396, DOI: 10.1186/1687-5281-2012-6**

## Description

### Field of the invention

The present invention relates to image analysis for authenticating a product.

### Background

Watches and other valuable objects, such as luxury or technical objects, are routinely counterfeited. Thus, there is a need to have a method for distinguishing between genuine and non-genuine products.

In many cases it is not possible or desirable to change the appearance or the functionality of the object. Therefore, marking or tagging the object is not a viable option.

US 2009/028424 A1 discloses capturing a plurality of images under a light source whose luminance varies over time, such as a fluorescent lamp, under such an imaging condition that a plurality of images that are different from one another in terms of light source conditions can be captured. The process detects a temporal luminance variation from the plurality of captured images, estimates a shadow area by using the temporal luminance variation, and performs an image process such as a process of synthesizing a linearized image or an image segmentation based on optical characteristics.

US 2012/076422 A1 relates to a method of authenticating images includes electronically receiving an anchor image and a query image, performing a feature point extraction of an anchor image, and performing a feature point extraction of a query image.

To enhance the accuracy of image alignment performed to reduce a vertical disparity between a first image and a second image that are images of the same object captured from different viewpoints, US 2013/004079 A1 discloses an image processing apparatus including a division unit which divides each of the first image and the second image into a plurality of sub-regions; and an extraction unit which performs feature point extraction on each of the sub-regions, wherein the extraction unit performs the feature point extraction in such a manner that a value indicating a degree of variation among the sub-regions in total number of extracted feature points is less than or equal to a predetermined value.

EP 1 143 375 A2 teaches an image comparison device for comparing a target object (an object to be recognized or identified) with registered objects (objects which are preliminarily registered to be compared with the target object) including a registration section and a comparison section.

US 2009/141984 A1 discloses an information processing apparatus including a model image obtaining unit; a model image feature quantity extracting unit; a matching unit; and an identifying feature point extracting unit.

WO 02/01513 A1 discloses a method to check the authenticity of a marking formed by one or more distinctive signs applied in a casual order onto a support. Before the markings are placed on the market, one detects macroimages thereof which include both the data concerning said distinctive signs and the data concerning the structure of the support onto which said signs are applied. Said macroimages are subsequently recorded and stored as original macroimages into a data base and, after the markings have been placed on the market, said macroimages are compared to the macroimage of a generic product put on the market, of which one wishes to check the authenticity.

### Summary of the invention

The invention is defined in independent claim 1. Advantageous features of the invention are subject to the dependent claims.

Images of watches and other products are complex and information-rich. An advantage of comparing the significant points between two images over comparing the raw image data is that it provides a practical way of comparing the images which requires a lesser processing demand.

During the comparison it is important to discriminate between relevant differences i.e., differences between the two images that are indicative of non-genuineness and non- relevant differences i.e. differences between the two images that do not indicate non- genuineness and which arise from the imperfect control of measurement conditions, for example noise and natural changes of the object which occur with time such as wear and aging. This is particularly true for complex objects which may contain moving parts which may change position, orientation, and or shape from one moment to another.

The relevant differences between the two images often correspond to minute details which must be matched between two measurements without human assistance.

The definition and the calculation of significant points may be based on algorithms that extract the most relevant information, and the most robust to image degradation such as noise, distortion, and imperfect measurement conditions. Thus only the most significant portion of the information contained in the two images is further processed and used.

In addition, non-relevant differences have a limited impact on the features of the calculated significant points and, in many cases, the most affected points may be detected and discarded, for example, points that have moved substantially because they are associated with mobile elements, such as watch hands.

The algorithms used for the calculation of significant points do not require human assistance. The algorithms may require human assistance to input a basic parameterization for the product being authenticated. A particular set of parameters may be valid for a particular type of product, such as watches. One algorithm and one set of parameters may be used for a large class of objects, such as watches of a particular model, shape, colour, etc.

The information for analysis may be densely distributed over a significant fraction of the image, as opposed to concentrated at a particular location, so authentication can be performed even when only a portion of the image is available. It may be desirable to define one or more regions of interest which are considered especially relevant and which may be selectively analysed.

The method may further comprise aligning a plurality of significant points of the image of the product to be authenticated with a plurality of significant points of the image of the genuine product prior to comparing the significant points.

The plurality of significant points which are used in the aligning step may be different to the plurality of significant points which are used in the comparing step.

The plurality of significant points which are used in the aligning step may be the same as the plurality of significant points which are used in the comparing step.

Aligning the significant points may comprise determining two or more matching pairs between the plurality of significant points of the image of the product to be authenticated and the plurality of significant points of the image of the genuine product.

Each of the significant points of the image of the product to be authenticated and the significant points of the image of the genuine product may comprise a descriptor, and wherein determining two or more matching pairs comprises comparing the descriptors of the plurality of significant points of the image of the product to be authenticated and the plurality of significant points of the image of the genuine product.

Comparing the descriptors may comprise determining a distance, such as a Euclidean distance, of a descriptor of a significant point of the image of the product to be authenticated and a descriptor of a significant point of the image of the genuine product. A significant point of the image of the product to be authenticated may be considered to match a significant point of the image of the genuine product when their distance satisfies a predetermined criterion.

The product to be authenticated and the genuine product may be located in a similar position in the images from which the significant points are calculated. Determining two or more matching pairs may comprise comparing significant points which have co-ordinates that satisfy a predetermined criterion, for example co-ordinates which are within a similar relative region of their respective image, for example co-ordinates which are within between 5mm and 10 mm of each other before alignment.

Aligning the plurality of significant points of the image of the product to be authenticated and the plurality of significant points of the image of the genuine product may comprise using the two or more matching pairs to determine a transformation for aligning the significant points.

Using the two or more matching pairs to determine the transformation may comprise minimising a root-mean-square distance between the location of the significant points of the matching pairs.

The method may further comprise applying the transformation to all of the plurality of significant points of the image of the product to be authenticated or to all of the plurality of significant points of the image of the genuine product to align the significant points.

The method may further comprise dividing the image of the product to be authenticated into a plurality of sub-regions, and aligning the plurality of significant points of the image of the product to be authenticated and the plurality of significant points of the reference image of the genuine product separately for the sub-regions. This may allow the significant points to be aligned more accurately within a sub-region.

Dividing the image of the product to be authenticated into a plurality of sub-regions may comprise applying a grid of dividing boundaries, preferably a grid of dividing orthogonal boundaries, to the image of the product to thereby define the sub-regions.

The image of the product may be divided into between 50 and 150 sub-regions, preferably into between 80 and 120 sub-regions, and preferably into 100 sub-regions.

The step of determining the plurality of significant points of the image of the product to be authenticated may comprise determining the plurality of significant points separately for the sub-regions after the sub-regions have been determined.

The method may comprise determining a plurality of significant points of the image of the product to be authenticated prior to determining the sub-regions for assisting the determination of the sub-regions.

Comparing the plurality of significant points of the image of the product to be authenticated with the plurality of significant points of the image of the genuine product may comprise determining if a significant point of the plurality of significant points of the image of the product to be authenticated is within a defined distance of a significant point of the plurality of significant points of the image of the genuine product.

The defined distance may be between one and two times the distance corresponding to one image pixel, for example between 25μm and 50μm

Comparing the plurality of significant points of the image of the product to be authenticated with the plurality of significant points of the image of the genuine product may comprise determining if a significant point of the plurality of significant points of the image of the product to be authenticated is within a defined distance of a significant point of the plurality of significant points of the image of the genuine product for at least some of the significant points of the image of the product to be authenticated or for at least some of the significant points of the image of the genuine product within a region of the image. The region of the image may be the entire image of the product. The region of the image may be a select region of interest of the image, for example a logo on the product. The region of the image may be one of the sub-portions of the image. The region of the image may be the region of the image for which significant points are calculated.

Comparing the plurality of significant points of the image of the product to be authenticated with the plurality of significant points of the image of the genuine product may comprise determining if a significant point of the plurality of significant points of the image of the product to be authenticated is within a defined distance of a significant point of the plurality of significant points of the image of the genuine product for select significant points of the image of the product to be authenticated or for select significant points of the image of the genuine product within a region of the image. The region of the image may be the entire image of the product. The region of the image may be a select region of interest of the image, for example a logo on the product. The region of the image may be one of the sub-portions of the image. The region of the image may be the region of the image for which significant points are calculated.

The method may further comprise determining a sum of the number of significant points of the image of the product to be authenticated which are within the defined distance of a significant point of the image of the genuine product within the region of the image.

The method may further comprise applying a function to the sum to determine an output for comparison with a threshold value to determine the authenticity of the product.

The function may comprise dividing the sum by the total number of significant points of the image of the product to be authenticated within the region of the image or by the total number of significant points of the image of the genuine product within the region of the image to determine a ratio.

The method may further comprise comparing the ratio with a threshold ratio to determine the authenticity of the product.

The threshold ratio may be between 20% and 50%, and preferably between 20% and 40%, and preferably between 20% and 30%.

The image of the product to be authenticated may have substantially similar production criteria to the image of the genuine product. Substantially similar production criteria may mean one or more of that the image of the product to be authenticated is captured under the same lighting conditions as the image of the genuine product; that the images are captured using a camera having the same image capture settings and lens specification; that the images are captured using substantially similar apparatus; that the product is placed in substantially the same orientation in the two images.

The product may be a timepiece, for example a watch. The product may be a mobile telephone. The product may be jewellery. The product may be a spare part. The product may be a battery, for example a mobile phone battery. The product maybe a microprocessor or a printed circuit board. The product may be software and, for example, the software packaging may comprise a printed region with distinctive characteristics which can be imaged and analysed for authenticating the software. The product may be a label which is affixed to another product, wherein the label has distinctive characteristics which can be imaged and analysed for authenticating or confirming the identity of the object or product to which the label is affixed. The product may be a certificate for example a driving licence or a university certificate confirming a candidate's grades. The product may be a coin. The product may be a painting. The product maybe also a natural or a non natural product having inherent disorders or a fingerprint or random distribution of elements. Example of natural product my be the skin of reptile for example (crocodile, python skin) or the section of a tree trunk, or for non natural product maybe a spare part such as a brake, a wing of an aircraft. The product will be analyzed according to the method of the present invention, in its entirely or only a part or section of the product will be analyzed according to the method of the present invention.

The method of authenticating a product, for example a timepiece, may further comprise using the image in performing the method of authenticating the product described herein or sending the image to a remote location for analysis with the method described herein.

The image may be a first image, and the method may further comprise capturing a second image of the product for creating a composite image based on the first image and the second image for comparison with a reference image of a genuine product for authenticating the product.

The step of capturing the first image of the product may be carried out when the product is illuminated from a first direction and wherein the step of capturing the second image of the product may be carried out when the product is illuminated from a second direction, wherein the second direction is different to the first direction.

Illumination from the first direction may illuminate the imaged surface of the product from the opposite side of the product to illumination from the second direction. Illumination from the first direction may illuminate the imaged surface of the product from the opposite side of an optical axis of a lens of a camera which captures the images of the product to illumination from the second direction.

The method may further comprise capturing a third image of the product when the product is illuminated from a third direction, and capturing a fourth image of the product when the product is illuminated from a fourth direction for creating a composite image based on the first, second, third and fourth images for comparison with a reference image of a genuine product for authenticating the product.

Illumination from the third direction may illuminate the imaged surface of the product from the opposite side of the product to illumination from the fourth direction, and wherein illumination from the first, second, third and fourth directions illuminates the imaged surface of the product from four different sides of the product. The first, second, third and fourth directions may be spaced evenly around the product.

Illumination from the third direction may illuminate the imaged surface of the product from the opposite side of an optical axis of the lens of the camera which captures the images of the product to illumination from the fourth direction. Illumination from the first, second, third and fourth directions may illuminate the imaged surface of the product from four different sides of the optical axis. The first, second, third and fourth directions may be spaced evenly around the optical axis.

The step of capturing the first image may be carried out at a first exposure time, and wherein the step of capturing the second image may be carried out at a second exposure time, wherein the first exposure time is different to the second exposure time.

Creating the composite image may comprise subtracting data pertaining to the first image from data pertaining to the second image or adding data pertaining to the first image to data pertaining to the second image.

The method may further comprise receiving imaging instructions comprising the conditions for capturing the image or images of the product to be authenticated, and capturing the image or images of the product according to the instructions.

The imaging instructions may convey substantially similar or the same conditions under which the reference image or images of a genuine product were captured at an earlier point in time so that the product to be authenticated can be imaged under substantially similar or the same conditions as the genuine product. The conditions may comprise one or more of lighting conditions; image capture settings for the camera; focal length for the camera lens; number of images to be captured; exposure time for the camera.

The method may further comprise outputting an answer indicating the authenticity of the product based on the degree of correspondence. Outputting the answer may comprise displaying the answer to a user on a screen, for example on a computer screen. Outputting the answer may comprise providing a printed copy of the answer to a user, for example printing the answer on an authentication certificate for the product.

In accordance with a further aspect of this disclosure, there is provided a computer program comprising executable instructions for execution on a computer, wherein the executable instructions are executable to perform the method described herein.

In accordance with a further aspect of this disclosure, there is provided a product authentication device for capturing an image of the product for authenticating the product, comprising a support for supporting the product to be authenticated; and a first illumination means for illuminating the product from a first direction.

The product authentication device may further comprise a second illumination means for illuminating the product from a second direction.

The first and the second illumination means may be configured so that in use illumination from the first direction illuminates the imaged surface of the product from the opposite side of the product to illumination from the second direction.

The product authentication device may further comprise a third illumination means for illumination the product from a third direction.

The product authentication device may further comprise a fourth illumination means for illuminating the product from a fourth direction.

The first, second, third and fourth illumination means may be configured so that in use illumination from the third direction illuminates the imaged surface of the product from the opposite side of the product to illumination from the fourth direction, and wherein illumination from the first, second, third and fourth directions illuminates the imaged surface of the product from four different sides of the product. The first, second, third and fourth directions may be spaced evenly around the product.

The product authentication device may further comprise a camera for capturing an image of the product.

The support may comprise an alignment means for locating the product in a predetermined location for capturing an image of the product. The product authentication device may comprise a camera support for fixing the camera in position relative to the predetermined location, whereby the optical axis of the lens of the camera is fixed in position relative to the predetermined location. The first and the second illumination means may be configured so that in use illumination from the first direction may illuminate the imaged surface of the product from the opposite side of the optical axis of the lens of the camera which captures the images of the product to illumination from the second direction. The third and fourth illumination means may be configured so that in use illumination from the third direction may illuminate the imaged surface of the product from the opposite side of the optical axis of the lens of the camera which captures the images of the product to illumination from the fourth direction. The first, second, third and fourth illumination means may be configured so that in use illumination from the first, second, third and fourth directions may illuminate the imaged surface of the product from four different sides of the optical axis. The first, second, third and fourth directions may be spaced evenly around the optical axis.

The product authentication device may further comprise a holding means for holding the product in the predetermined location.

The holding means may comprise a spring-biased arm for pushing the product against the alignment means to hold the product in the predetermined location. Alternatively, the product authentication device may comprise two or more spring-biased arms which exert a force on opposing sides of the product to hold the product in a predetermined position.

The product authentication device may further comprise a cover for protecting the product from ambient light during image capture.

The product authentication device may further comprise a computer for analysing images of the product, and preferably wherein the computer analyses the images using the method described herein.

In accordance with a further aspect of this disclosure, there is provided a method of creating a reference for authenticating a product comprising capturing an image of at least part of the product; and- storing the image as a reference, preferably storing the image in a database, for authenticating the product.

The image may be a first image and the method may further comprise capturing a second image of at least part of the product, and storing the second image as a reference for authenticating the product.

In accordance with a further aspect of this disclosure, there is provided an image file containing reference data for authenticating a product, wherein the reference data comprises a plurality of significant points of an image of at least part of a product.

In accordance with a further aspect of this disclosure, there is provided a database containing reference data for authenticating two or more products, wherein the reference data comprises data pertaining to an image of at least part of a first product, and data pertaining to an image of at least part of a second product. Each significant point may comprise a radius (r), an orientation (($\theta$)), a descriptor (D) and its co-ordinates. The method may comprise determining a descriptor for one or more of the significant points of the image. The descriptor may comprise an array of data corresponding to a mathematical description of the corresponding image region. For the purpose of explaining its further use, a descriptor may be thought of as a vector in an abstract vector space with dimensions equal to the size of the array.

## Brief description of the figures

The foregoing and other objects, features and advantages of the invention will be apparent from the following description and drawings, in which:

Figure 1 shows an apparatus for imaging a product for authentication;

Figure 2 shows a top view of details of the arrangement of the illumination means from figure 1 as they illuminate the product from different sides of the product;

Figures 3A to 3D show four images of the same object illuminated from different sides of the product, referred to as North, East, South, and West wherein Figure 3A shows the object illuminated from the West side, Figure 3B shows the object illuminated from the East side, Figure 3C shows the object illuminated from the North side, and Figure 3D shows the object illuminated from the South side;

Figures 4A to 4C show composite images, wherein Figure 4A is the difference between the images of Figures 3A and 3B, Figure 4B is the difference between the images of Figures 3C and 3D, and Figure 4C is the sum of the images of Figures 4A and 4B;

Figure 5A and Figure 5B show different images of the same object, wherein Figure 5A shows a reference image for the object and Figure 5B shows an image for comparison with the reference image;

Figures 6A and 6B are visual representations of significant points, wherein Figure 6A shows significant points detected on the whole region of interest of the object, the points being marked with a small black cross, and showing an example of a grid applied to the time piece, and Figure 6B is a zoomed in view showing part of the image of Figure 6A, the significant points being marked with a circle centred on the point and the radius of the circle showing the size of the corresponding feature and its orientation;

Figure 7 shows an example of a grid applied to a product;

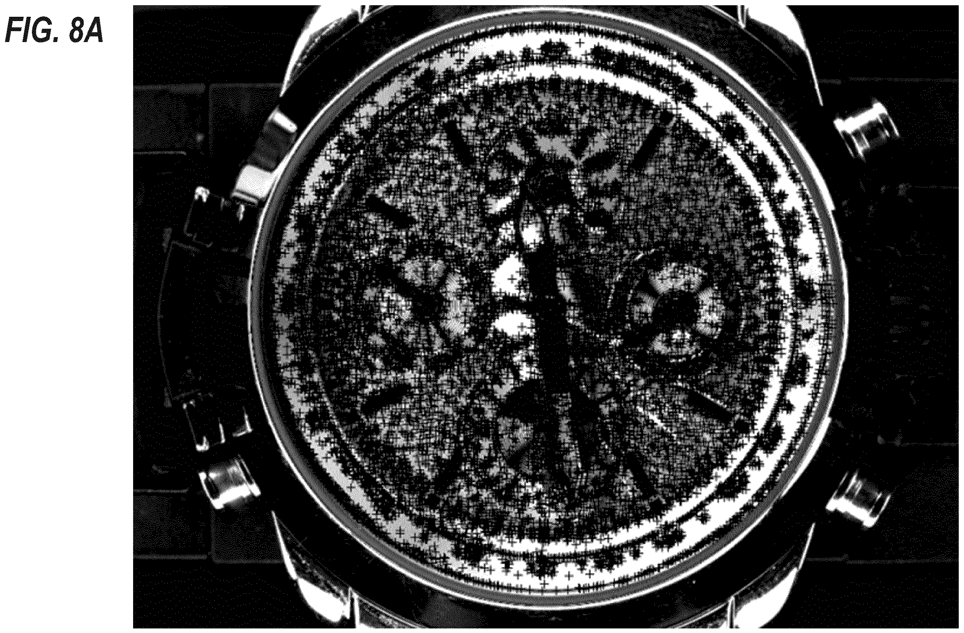

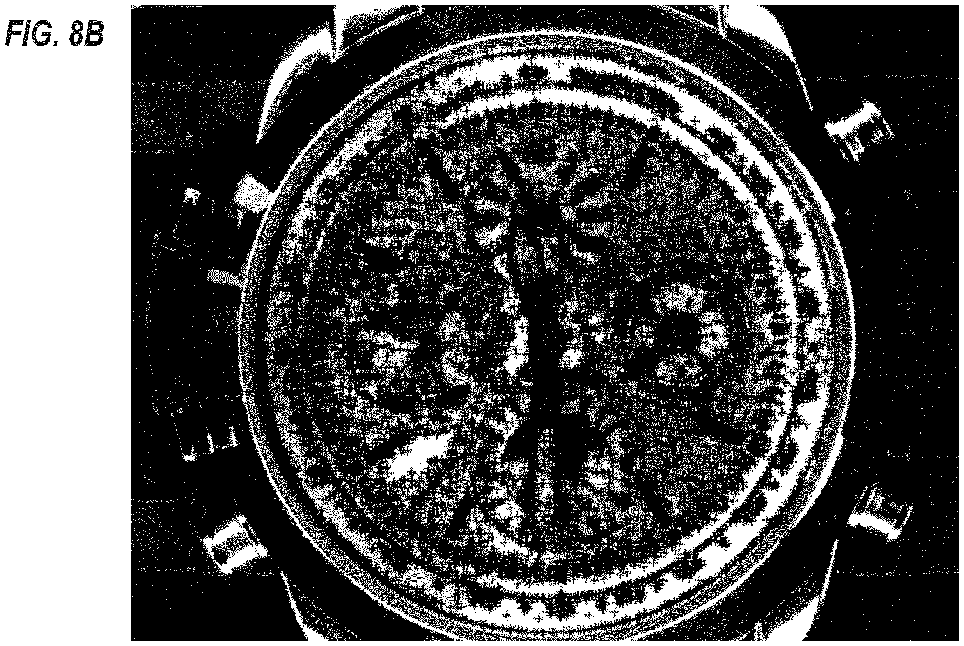

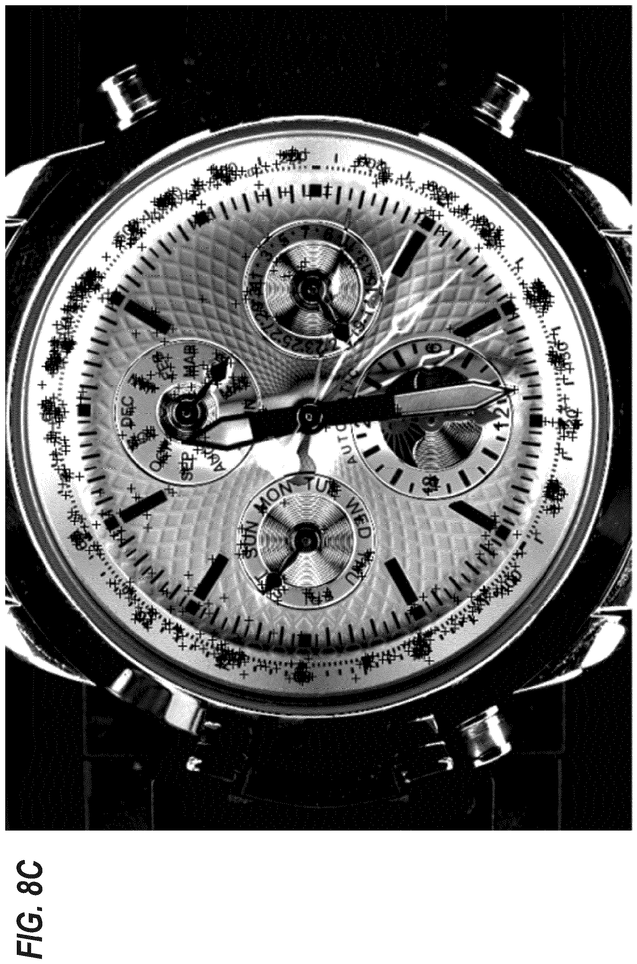

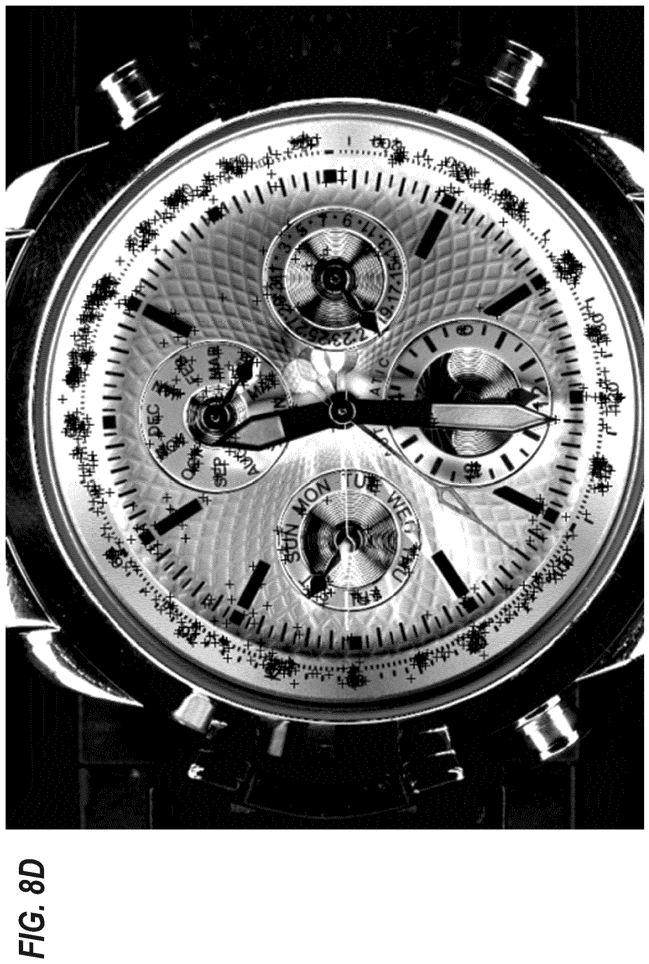

Figures 8A to 8D show significant points and matches of significant points for a reference image and for a check image to be compared with the reference image, wherein Figure 8A shows significant points determined for the reference image, the significant points being marked with a small black cross, Figure 8B shows significant points determined for the check image, Figure 8C shows the significant points of the reference image which match with significant points of the check image, and Figure 8D shows the significant points of the check image which match with significant points of the reference image;

Figure 9A shows the superposition of two images when the images are not aligned, and Figure 9B shows the superposition of two images after they have been aligned through defining a common co-ordinate system;

Figure 10 illustrates comparing the reference significant points and the check significant points after the points have been aligned;

Figures 11A to 11D show significant points and significant points that are closer than two pixels for a reference image and for a check image to be compared with the reference image after the significant points have been referred to a common co-ordinate system, wherein Figure 11A shows the significant points determined for the reference image and

Figure 11B shows the significant points determined for the check image, Figure 11C shows the significant points of the reference image which are closer than two pixels to a significant point of the check image in the common co-ordinate system, and Figure 11D shows the significant points of the check image which are closer than two pixels to a significant point of the reference image in the common co-ordinate system; and

Figure 12A to 12D illustrate zoomed in versions of part of the images shown in Figures 11A to 11D, wherein Figure 12A shows part of figure 11A, Figure 12B shows part of figure 11B, Figure 12C shows part of figure 11C,, and Figure 12D shows part of figure 11D.

## Detailed description of embodiments of the invention

In the following sections detailed descriptions of embodiments of the invention are given. The description of both preferred and alternative embodiments are exemplary embodiments only, and it is understood that variations, modifications and alterations may be apparent. It is therefore to be understood that said exemplary embodiments do not limit the broadness of aspects of the underlying invention.

An image, or a plurality of images, of a product to be authenticated are taken for authenticating the product. The plurality of images of the product may be combined to produce a single image of the product. The image of the product is then compared with an image of a genuine product taken previously, herein referred to as a reference image, to determine if the products in the two images are the same and hence if the product is authentic. The image of the product which is compared with the reference image is herein referred to as a check image. The check image is captured under the same or substantially similar conditions to the reference image, for example under substantially similar lighting conditions, so that the images to be compared are as similar as possible. The product may be located at substantially the same position in the check image as in the reference image. The product may be imaged using a lens of the same focal length so that the two images to be compared are as similar as possible. The method advantageously allows subtle differences between the products to be detected.

The images may be captured with analogue photography, using a camera and film, or preferably the images are captured with a digital camera, at a resolution where the details of the object used for authentication purpose are visible. The images may be colour images or black and white grayscale images.

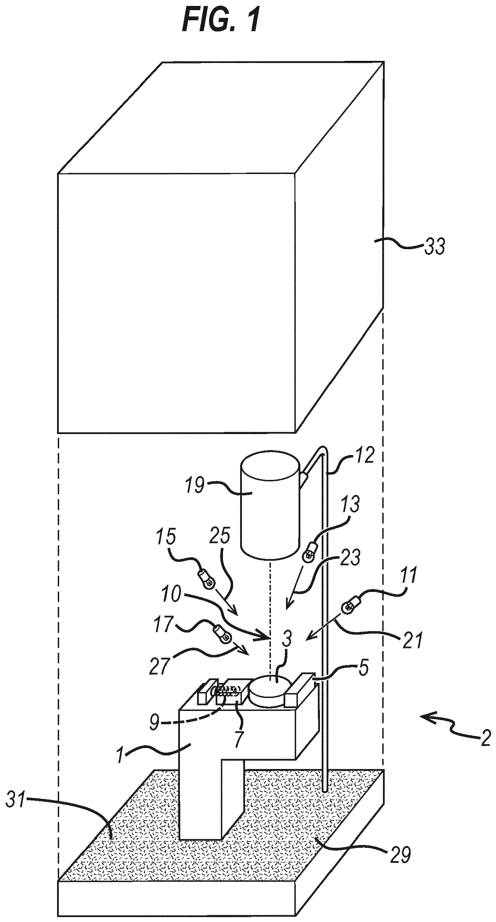

An apparatus or imaging apparatus 2 for capturing a check image and a reference image of the product is shown in figure 1. The apparatus 2 comprises a support 1 for supporting the product 3. The support comprises an alignment means 5 for locating the product in a predetermined position or location. The product can therefore be located in a set position relative to the camera 19 and/or the illumination means 11, 13, 15, 17. The apparatus comprises a holding means 10 for holding the product in the predetermined position. The holding means 10 may comprise an arm 7 which is biased with a spring 9 to push the product against the alignment means 5 to hold the product 3 in the

7

predetermined position. The alignment means 5 provides a reference surface against which the product is pushed by the arm 7. This ensures that the product is in substantially the same position in the reference image and in the check image.

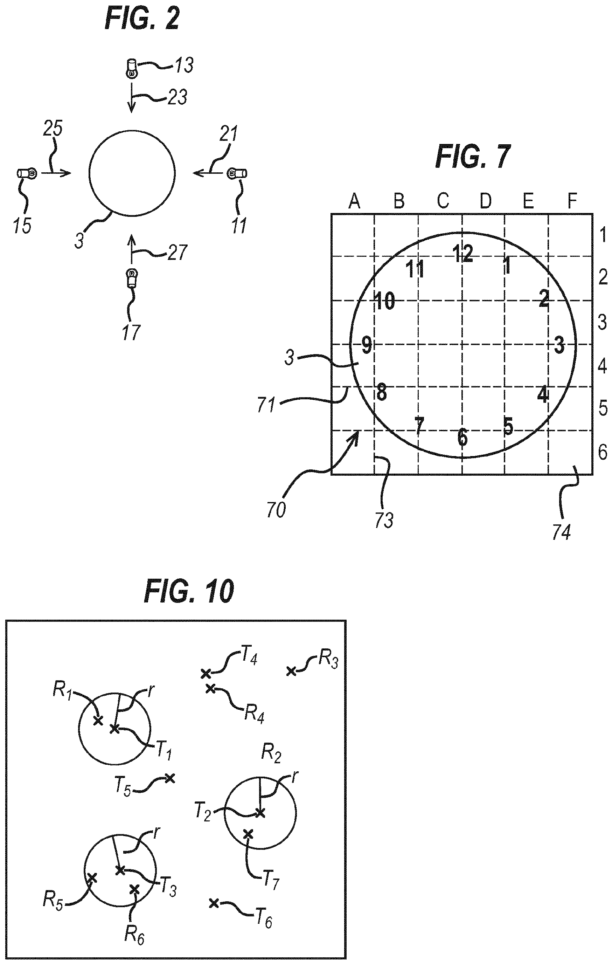

The apparatus comprises a camera 19 for capturing one or more images of the product. Four illumination means 11, 13, 15, 17 are provided, each of which emits light in an illumination direction 21, 23, 25, 27. The illumination means 11, 13, 15, 17 are arranged to illuminate the imaged surface of the product from different sides of the product. The first illumination means 11 emits light in a first direction 21. The second illumination means 15 emits light in a second direction 25. The third illumination means 13 emits light in a third direction 23. The fourth illumination means 17 emits light in a fourth direction 27. The illumination means are arranged to illuminate the product from different sides of the product so that multiple images of the same or a substantially similar part of the product can be captured under different lighting conditions for creating a composite image of the product. The illumination means are preferably identical. The illumination means are preferably arranged such that their illumination directions are axially symmetric with respect to the optical axis 10 of the camera. When four illumination directions are used, this axial symmetry results in the projections of the illumination means on the focal plane being mutually orthogonal, as seen in Figure 2 More generally, a number n of illumination means can be used, which are preferably identical and arranged such that their illumination directions are axially symmetric with respect to the optical axis of the camera, in which case, the projections of the respective illumination means on the focal plane form an angle of 360/n degrees ($2\pi$/n radians). The number n is preferably even (n=2,4, 6, ...).

The support 1 is mounted on a platform 29. The platform preferably has a light absorbing upper surface 31 which for example may be black. A cover 33 is provided. The cover is mounted over the support 1 and engages the platform to encase the camera 19, the illumination means 11, 13, 15, 17 and the product 3. The cover is hollow inside and its inner walls absorb light. The inner walls of the cover may be black. The cover 33 and the platform 29 together enclose the camera 19, the illumination means 11, 13, 15, 17, and the product 3 on all sides and above and below and prevent ambient light from entering the lens of the camera. This means that the imaging conditions can be controlled to a high degree since ambient light cannot create differences between two images.

The camera 19 may be mounted on the cover 33 or on the platform 29 using a camera support 12. In figure 1, the camera support 12 mounts the camera to the platform 29. The camera support 12 enables the camera to be fixed in position relative to the predetermined location in which the product is located when it is imaged. The camera can be fixed in position above the product. The optical axis 10 of the lens of the camera can therefore be fixed in position relative to the predetermined location. The illumination means 11, 13, 15, 17 may be mounted on the cover 33 or on the platform 29. In one example, the camera 19 and three of the illumination means are mounted on the platform 29. One of the illumination means is mounted on the cover 33.

The apparatus may comprise a computer for receiving the image data captured by the camera. The computer may be configured to perform the comparison of the captured image with a reference image for authenticating the product, as described further herein. Alternatively or additionally, the computer may be configured to send the captured image for analysis at a server at a remote location.

When capturing the image of the genuine product to collect reference data against which the product can be later authenticated, the genuine product is first positioned on the support 1. The camera parameters, such as focal length, exposure time and resolution, are set. System parameters, such as the colour of the illumination means 11, 13, 15, 17, and intensity of the illumination means 11, 13, 15, 17 are set. A reference image is then captured. The image quality may be validated. The raw data may then be sent to a server for storing and/or processing, wherein the server may be located remotely from the imaging apparatus 2. The server may be a central server to which multiple imaging apparatus 2 may be connected so that the data is centrally stored and processed. Optionally, the server determines the significant points for the reference image and stores the significant points as a reference. Alternatively or additionally the significant points are determined at a later point in time when a product is being authenticated.

The server may store the data for the reference image in a database. The reference image data may be stored against a product identifier, such as a serial code for the identifying the product. The reference image data thus provides a unique reference for authenticating the product at a later point or points in time.

The data sent to the server for storing may comprise event data. Event data may comprise data conveying the time, location, operator identity, date and/or imaging conditions under which the reference image was taken. The server may send a confirmation to the imaging apparatus 2 to confirm that the image data and the event data have been received.

To authenticate a product, an image of the product to be authenticated is taken for comparison with the reference image, using the apparatus 2. The product to be authenticated is positioned on the support 1. The camera and system parameters are set. The server may convey the camera and system parameters to the imaging apparatus 2 so that the image or images of the product can be taken under the same camera and system parameters to those used to capture the reference image or images.

The check image of the product is taken. The image quality may be validated.

Event data may additionally be sent to the server for storing. Event data may comprise data conveying the time, location, date, operator identity and/or imaging conditions under which the check image was taken. The server may send a confirmation to the imaging apparatus 2 to confirm that the image data and the event data have been received.

Significant points are then computed for the check image. If not already calculated, the significant points are then calculated for the reference image. Calculation and comparison of the significant points of the check image and the reference image is described in more detail below. Calculation and comparison of the significant points may be performed by the remote server or may be performed by a computer local to the imaging apparatus 2. If the calculation and comparison of the significant points is performed by the remote server then the authentication result of the data processing, for example authentic or non-authentic, may be transmitted from the remote server to a computer at the same location as the imaging apparatus 2 so that an operator at the location of the imaging apparatus 2 can be informed of the result.

To compare the images, the method involves determining significant points of the check image and comparing these points with significant points of the reference image. The image of the product to be authenticated is taken under substantially the same conditions as the image of the genuine product. Each image may be processed in the same way before the significant points are determined. For example, a composite image may be produced from a plurality of images of the product to be authenticated and compared with a composite image produced from a plurality of images of the genuine product. The composite image of the product to be authenticated may be produced in the same way as the composite image of the genuine product. Significant points may be determined for each of the composite images and compared.

A composite image results from the combination of two or more images of the product, each image corresponding to a different set of measurement parameters such as camera position, exposure time, illumination and/or filtering. An example of a composite image would be a High Dynamic Range Image (HDR) obtained by combining several images taken with different exposure times. Another example would be a differential image obtained by taking the difference of two images where the illumination does not come from the same direction. Another example would be a stereoscopic picture. Another example would be the juxtaposition of two or more pictures each containing a portion of the object. The composite image may be obtained by combining images taken with different exposure times and/or with different directions of illumination.

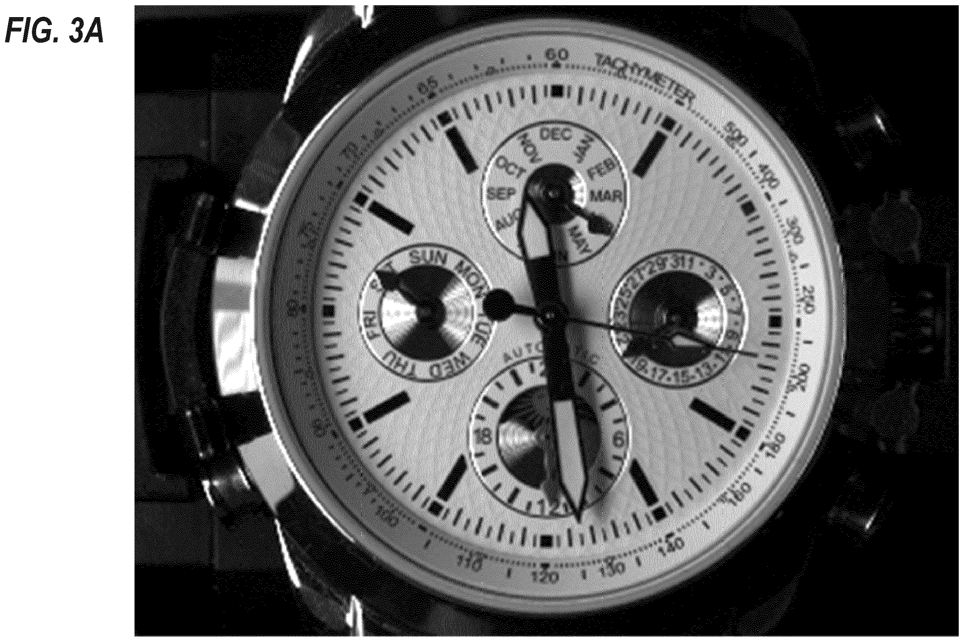

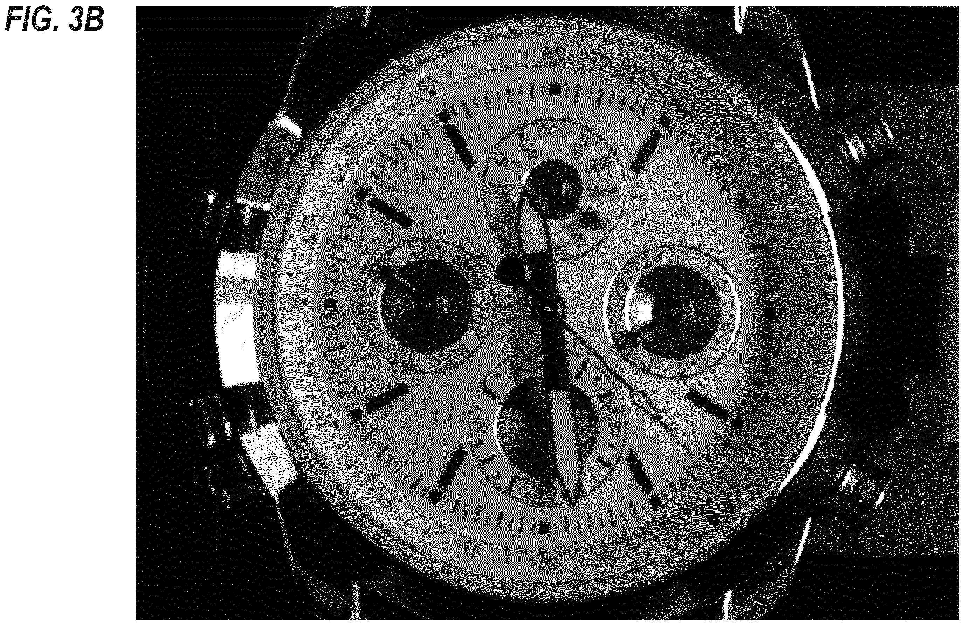

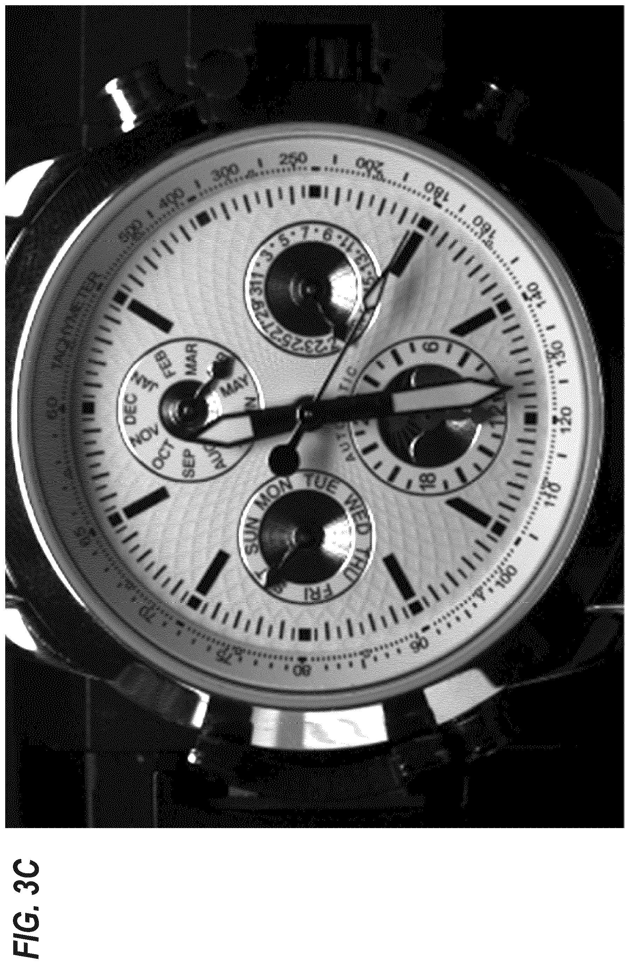

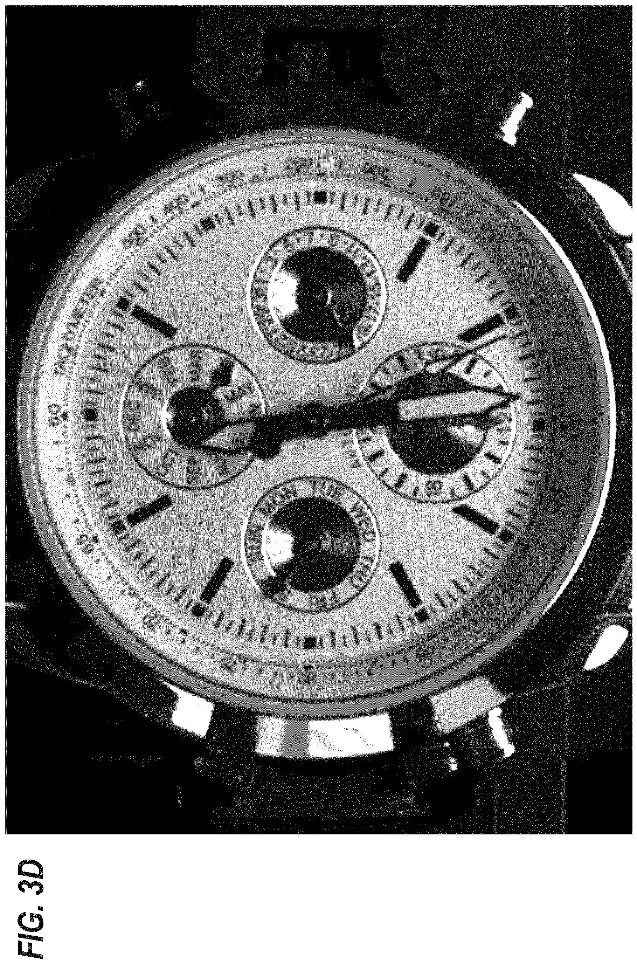

Figures 3A to 3D show four images of the same object, in this case a watch, illuminated from four different directions and obtained by the imaging apparatus of Figure 1. In Figure 3A, the object is illuminated by the second illumination means 15 and in Figure 3B the object is illuminated by the first illumination means 11, in order to enhance the details of the three dimensional structure of the object and of its surface. In Figure 3C, the object is illuminated by the third illumination means 13 and in figure 3D the object is illuminated by the fourth illumination means 17. The four images are then used to create a composite image for comparison with another image. Creating a composite image for comparison is especially helpful for relatively flat product surfaces to increase the number of points of interest which can be detected and analysed.

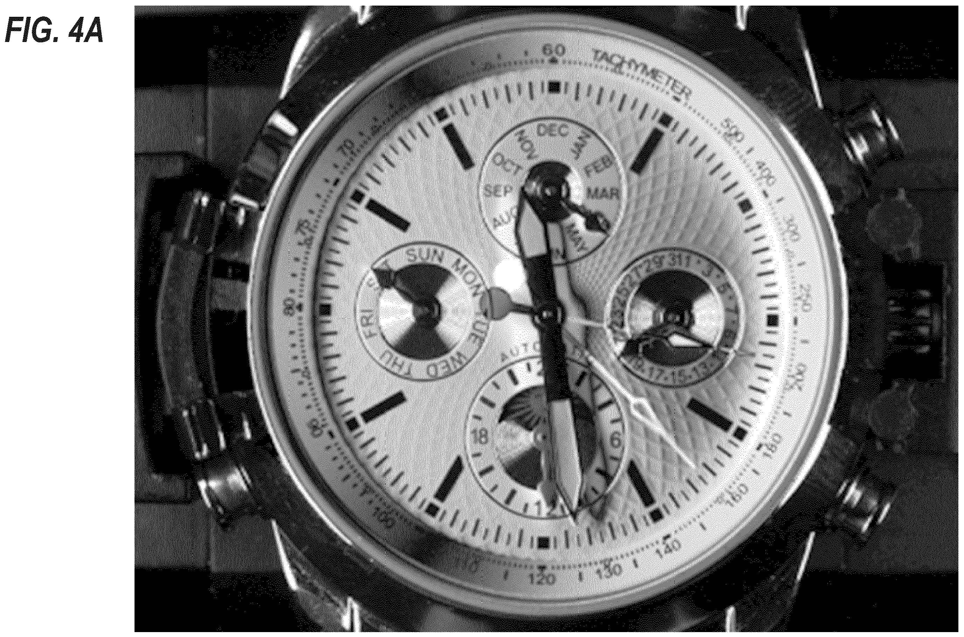

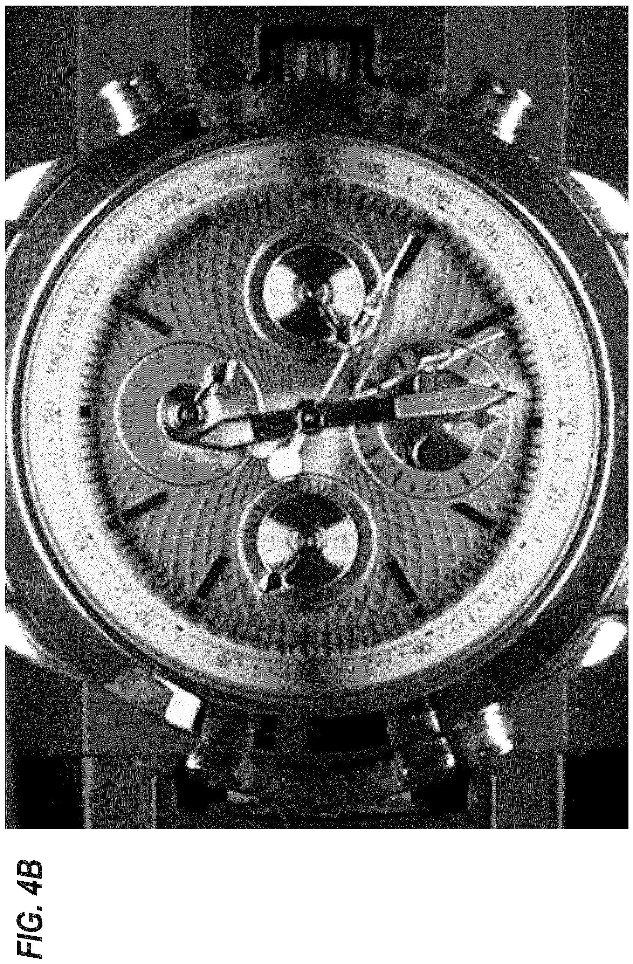

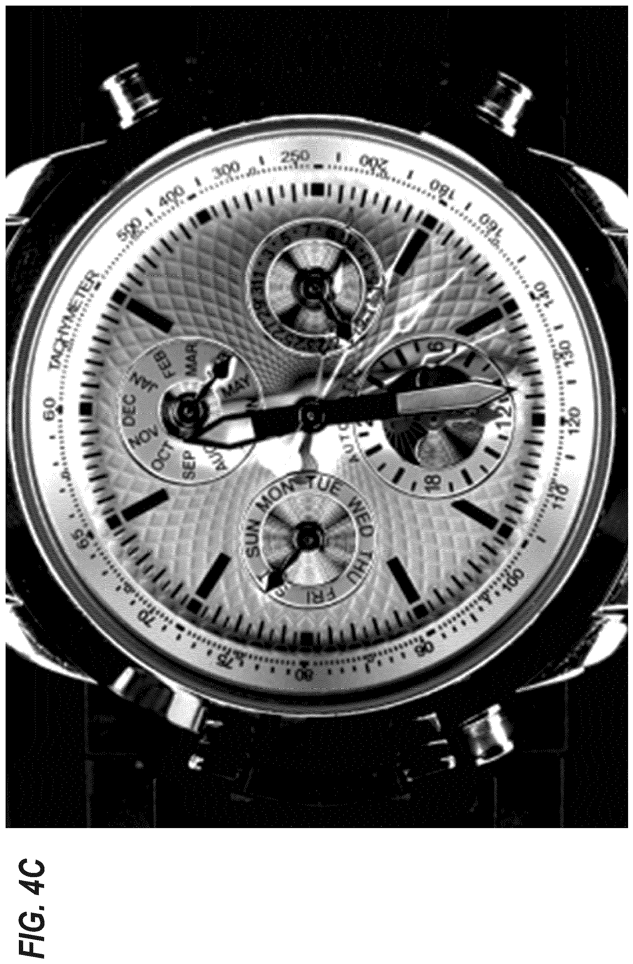

The composite image may be created, for example, by subtracting the images shown in Figures 3A and 3B to result in the image shown in Figure 4A, or by subtracting the images shown in Figures 3C and 3D to result in the image shown in Figure 4B. The composite image may be created from a combination of four images, for example by summing the images shown in Figures 4A and 4B to result in the image shown in Figure 4C. Thus, a reference image may be created. A check image may be created in the same way and significant points calculated from each of the composite images and compared.

Each image captured by the camera 19 may have a resolution of 5M pixels (2560 x 1920 points). There may be 24 bits per pixel. The image may be a RGB image. The field of view may be approximately 63 x 48 mm, corresponding to an approximate resolution of 25 $\mu$m per pixel. The images which are compared may be raw images with, for example, 8 bits per pixel or 12 bits per pixel. The images which are compared may be a monochrome images with for example, 8 bits per pixel or 12 bits per pixel or 16 bits per pixel.

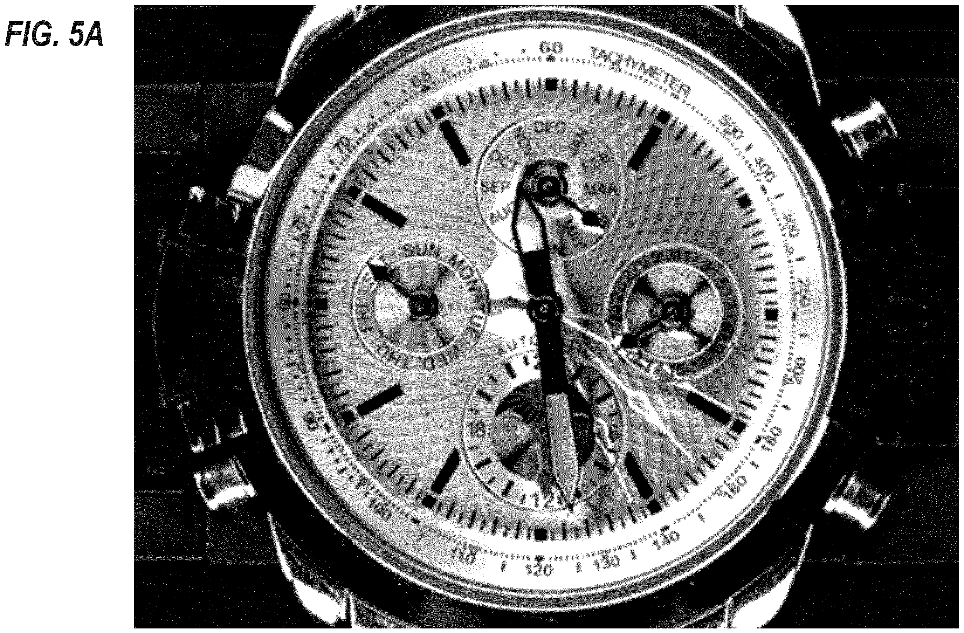

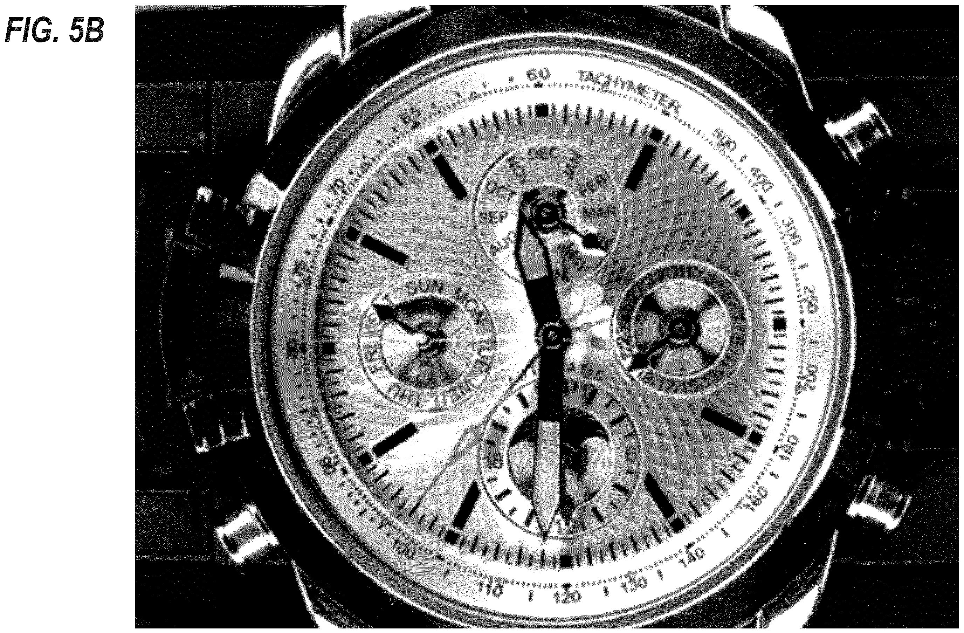

Figure 5A shows a reference image of a genuine object and Figure 5B shows a check image of the object for comparison with the reference image. Note that the configuration of the object in the two images is similar but not identical the same since the position of the object is not identical and some of the mobile parts, in this case the watch hands, have moved. The reference image and the check image were each produced under substantially similar or the same conditions.

Although the following describes comparing the entire of the object which is visible in both images, it is to be understood that the same processing may be applied only to a select portion or portions of the object which is visible in the images, for example only the central portion of the object or a particular information rich region of the object such as a logo on the object could be compared.

The images may be each decomposed into two or more sub-images which are then processed separately. This would be done, for example, for the purpose of obtaining a more discriminating answer by selecting the most relevant portion or portions of the images, or for the purpose of speed and efficiency when decomposing the images into sub-images and processing them separately.

The images to be compared are processed using a computer to calculate a list of significant points for each image. The list of significant points for the reference image are herein referred to as the reference list and the list of significant points for the check image are herein referred to as the check list. One of the significant points for the reference image is herein referred to as a reference point. One of significant points for the check image is herein referred to as a check point. Each significant point or interest point represents a region of the image, and hence a part of the object, with distinctive characteristics that make it recognizable under partial degradation of the image which may arise, for example, from noise, distortion, and imperfect measurement conditions. A typical example of one such region would be a corner. There may be between 1000 and 20,000 significant points extracted for each image.

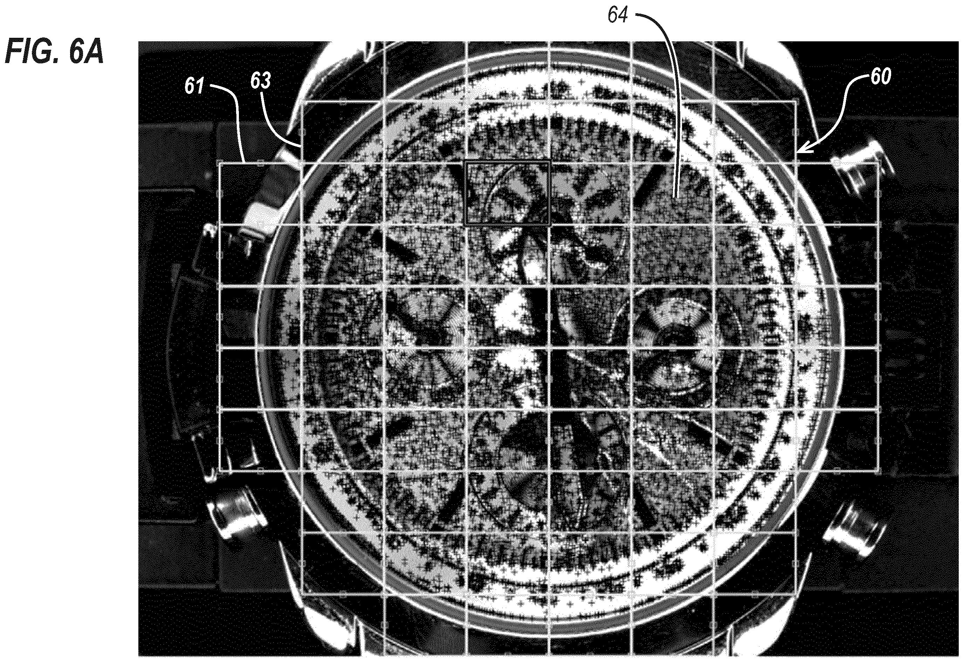

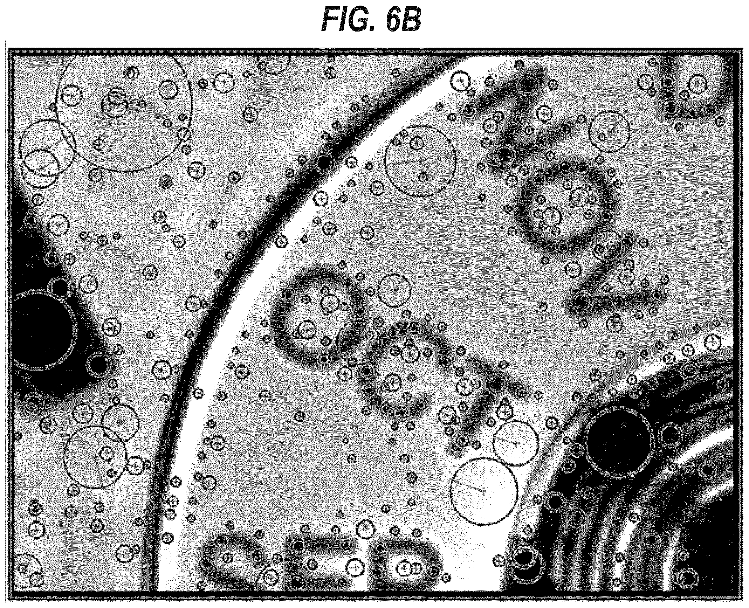

Each significant point may comprise one or more data related to spatial or geometrical features of the corresponding image region, such as coordinates (x, y), radius (r) and orientation (θ), and may comprise a descriptor (D) for example an abstract vector of numbers corresponding to a mathematical description of the corresponding image region. Each descriptor may comprise a number of elements, for example 128. Figures 6A and 6B show visual representations of significant points for an object. Figure 6A shows significant points detected on the whole image, the location of the points being marked with a small black cross, and Figure 6B is a zoomed in view showing part of the image of Figure 6A, the points being marked with a circle centred on the point and the length of the radius (r) of the circle showing the size of the corresponding feature and the relative angle of the radius representing the orientation (θ) of the significant point. The location of the centre of the point may be expressed in Cartesian co-ordinates.

This kind of significant point is often used in computer vision systems for the purpose of performing image operations, such as image stitching. A number of algorithms have already been developed to detect significant points on an image, such as corner detectors, Harris, FAST and DoG, as well as to implement a descriptor for the points, such as patch, SURF, SIFT, HOG and GLOH.

Having calculated the significant points, the check image is then sub-divided into a number of small sub-regions, for example 100 sub-regions. If there are 100 sub-regions then there may be 50 000 pixels per sub-region. There may be tens or hundreds of significant points per sub region and there may be up to 1000 significant points for a very dense sub region. Figure 7 shows an example of an image which has been divided into 36 sub-regions 74 by applying a grid 70 of dividing horizontal and vertical lines 71, 73 to the image to delineate the sub-regions 74. Sub-regions A1, F1, A6 and F6 will be excluded from analysis since the product is not present in these sub-regions. The check image may be automatically sub-divided into sub-regions depending on the geometry of the product and the level of detail of the images. Figure 6 also shows an example grid 60, which has dividing horizontal and vertical lines 61, 63 which delineate the sub-regions 64.

Having calculated the significant points for the reference image, it is similarly divided into sub-regions which are comparable in number, size, location on the product, and shape to the sub-regions of the check image. The same size sub-regions may be used for the reference image and the check image.

After the sub-regions are determined, the significant points are then calculated again for each sub-region of the check image and for each sub-region of the reference image. In this example, each significant point comprises coordinates of the significant point (x, y), its radius (r) and orientation (θ), and a descriptor (D). The significant points are calculated before the sub-regions are determined for the whole image or region of interest of the image up to a certain level of resolution. After the sub-regions are determined, the significant points are calculated again to a finer resolution for each of the sub-regions. This results in a greater number of significant points for each sub region and the significant points have a smaller radius. It would be possible to calculate the significant points at the finer resolution for the whole image, but dividing the image into sub-images makes it easier to parallelize the calculation and hence makes the execution faster on a multi-processor system.

The significant points are calculated at a coarser resolution for the whole image before the sub-regions are determined, in order to minimize edge-effects and, because there are less coarse points than fine points, one does not need to parallelize this step.

Since the object is imaged in approximately the same position, is imaged from approximately the same direction and at the same magnification, the portion of the object in one sub region of the check image will approximately correspond to the same portion of the object in a corresponding sub-region of the check image. For example, in figure 7 in sub-region B5 of the check-image, a feature of the object 3, reference numeral "8", is present. The same feature will be present in corresponding sub-region B5 of the reference image. Hence, a comparison of corresponding sub-regions allows a comparison of corresponding features of the product in the check image and the product in the reference image.

After the significant points have been determined for the sub-regions of both the reference image and the image to be checked, the matching points between corresponding sub-regions in the two images are determined, wherein the matching points are the ones with the most similar descriptors in corresponding lists of significant points. Matching points may be determined between a given sub-region of the check image and its corresponding sub-region of the reference image and in the neighbouring sub-regions up to a prescribed distance from the border of the sub-regions being compared. This accommodates for the product not being exactly aligned in the check image and the reference image. A pair of matching points is herein referred to as "a match" or "a matching pair". That is, for each point in one list, the most likely match is searched, in terms of similarity of the descriptors to the points in the other list and, optionally in terms of spatial features of the points such as proximity of the points, similar orientations of the points and similar sizes of the points.

Each descriptor may comprise a number of elements, for example 128. A significant point from one list may be considered to match a significant point from another list when their descriptors satisfy a given criterion.

Two descriptors $\mathbf{p}=(p_1, p_2, ... p_n)$ and $\mathbf{q}=(q_1, q_2, ... q_n)$ may be considered to match when their distance satisfies a predetermined criterion, wherein $p_1, p_2... p_n$ represent different elements of the descriptors.

In the following examples, it is assumed that the descriptors are normalized, i.e. that the vectors $\mathbf{p}$, and $\mathbf{q}$, satisfy $\|\mathbf{p}\| = \|\mathbf{q}\| = 1$

Determining whether or not two descriptors match may comprise determining the Euclidean distance of the two descriptor vectors, for example determining the 2-norm function

$$d(\mathbf{p},\mathbf{q}) = \sqrt{(p_1 - q_1)^2 + (p_2 - q_2)^2 + ... + (p_n - q_n)^2} = \sqrt{(\mathbf{p}-\mathbf{q})\cdot(\mathbf{p}-\mathbf{q})}$$

It should be pointed out that for reasons of convenience, such as computational speed, this distance can be calculated as

$$d(\mathbf{p},\mathbf{q}) = \sqrt{(\mathbf{p}-\mathbf{q})\cdot(\mathbf{p}-\mathbf{q})} = \sqrt{\mathbf{p}\cdot\mathbf{p} + \mathbf{q}\cdot\mathbf{q} - 2\mathbf{p}\cdot\mathbf{q}} = \sqrt{2[1 - (\mathbf{p}\cdot\mathbf{q})]}$$

where the last equality holds when p, and q, are normalized.

When the angle $\theta$ between the two vectors is small, this may be further approximated by

$$d(\mathbf{p},\mathbf{q}) \approx \sqrt{2[1 - \cos(\theta)]} \approx \theta = \arccos(\mathbf{p}\cdot\mathbf{q})$$

Other appropriate functions may be used to normalize the descriptors and to calculate their distance, for example, the 1-norm distance

$$d(\mathbf{p},\mathbf{q}) = |p_1 - q_1| + |p_2 - q_2| + ... + |p_n - q_n|$$

or another p-norm distance

$$d(\mathbf{p},\mathbf{q}) = \left(|p_1 - q_1|^p + |p_2 - q_2|^p + ... + |p_n - q_n|^p\right)^{\frac{1}{p}} \quad \text{with p>1}$$

The pre-determined criterion may be an absolute criterion, for example that the distance is smaller than a given value, or a relative criterion, for example that the distance between the descriptor of the reference point and the descriptor of the matching check point is smaller than the distance between the descriptor of the reference point and the descriptor of any other check point, or, for example that the distance between the descriptor of the check point and the descriptor of the matching reference point is smaller than the distance between the descriptor of the check point and the descriptor of any other reference point.

The predetermined criterion may be a combination of an absolute and a relative criterion. Furthermore, when many similar descriptors exist in a list, such as for images containing repetitive patterns, it may be advantageous to restrict the search of matching descriptors to couples of points that are closer in space than a given distance.

Figure 8A shows significant points which have been determined for the reference image, the location of the significant points being marked with a small black cross. Figure 8B shows significant points determined which have been determined for the check image which is to be compared with the reference image. Figure 8C shows the significant points of the reference image which match with significant points of the check image, and Figure 8D shows the significant points of the check image which match with significant points of the reference image.

The best matching pairs may then be selected and used to determine a common coordinate system for the two images so that the significant points can be compared in a common frame of reference. The best matching pairs may be used to determine a transformation which brings the best matching pairs into as close an alignment as possible. The transformation may then be applied to all of the significant points of the reference image or to all of the significant points of the check image to align the significant points in a common co-ordinate system. There may be, for example, 1000 matching pairs within a sub-region and the best 100 or 150 matches may be selected from these matching pairs to determine the transformation. The transformation may comprise performing a translation and/or a rotation of the coordinates of the reference points and/or of the co-ordinates of the check points e.g. to account for different positioning of the object in the reference image and in the check image. The transformation may further comprise a more complex operation such as scaling, share and distortions, e.g. to account for differences of perspective in the two images being compared or the different optical distortions of the corresponding imaging systems. Although the object in the two images is approximately aligned, it is not exactly aligned, and comparing the significant points from the two images in the same orientation and perspective improves the comparison of details between the two images.

A transformation matrix may be determined for corresponding sub-regions and applied to all significant points in one of the corresponding sub-regions to rotate and/or translate the co-ordinates of the significant points in the particular sub-region to align as closely as possible with the significant points in the corresponding sub-region. The transform matrix is determined separately for corresponding sub-regions between the two images, rather than for the image as a whole, to improve the alignment and subsequent comparison between corresponding sub-regions of the two images. Alternatively, it would be possible to determine a single transformation matrix for all of the significant points of the image and to process the image in this step as a whole.

An origin and two Cartesian axes may be defined for the common co-ordinate system, wherein the matching significant points have as close as possible the same coordinates in the respective reference frame. As an example, the common coordinate system may be the one that minimizes the root-mean-square residual distance ($d_{rms}$) between the matching points used to determine the common co-ordinate system. The term root-mean-square, referred to a series of $n$ values, is used here in its conventional sense as the square root of the sum of the square of the residual distances ($d_1, d_2, ..., d_n$) between matching points divided by the total number of values ($n$) which have been squared and summed:

$$d_{\mathrm{rms}} = \sqrt{\frac{d_1^2 + d_2^2 + ... + d_n^2}{n}}$$

The transform matrix which results in the minimum root-mean-square residual distance between matching points then applied to all significant points, and not only to the matching pairs, in a sub-region to align them as closely as possible with the significant points in a corresponding sub-region.

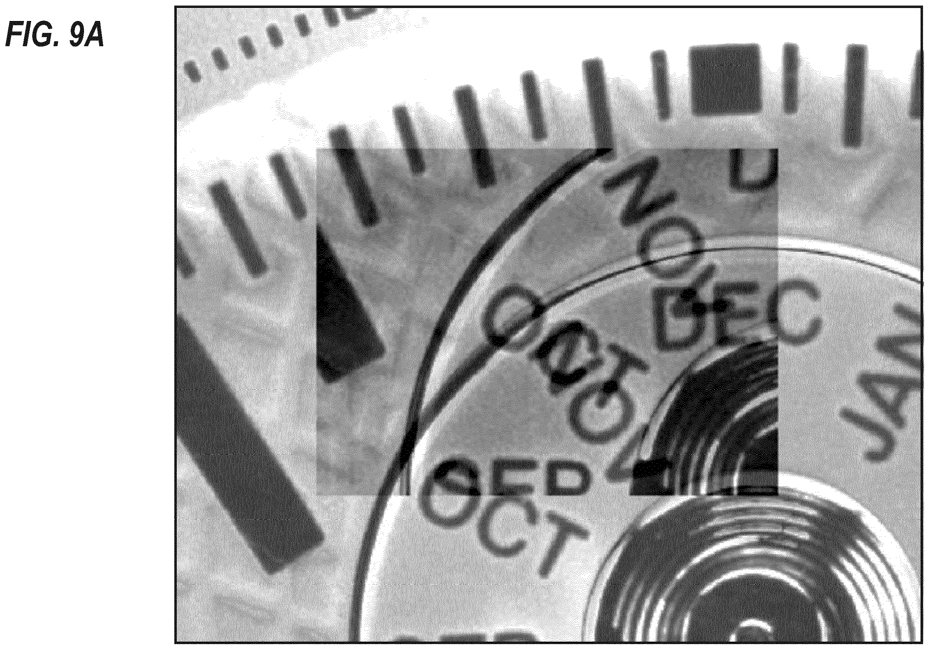

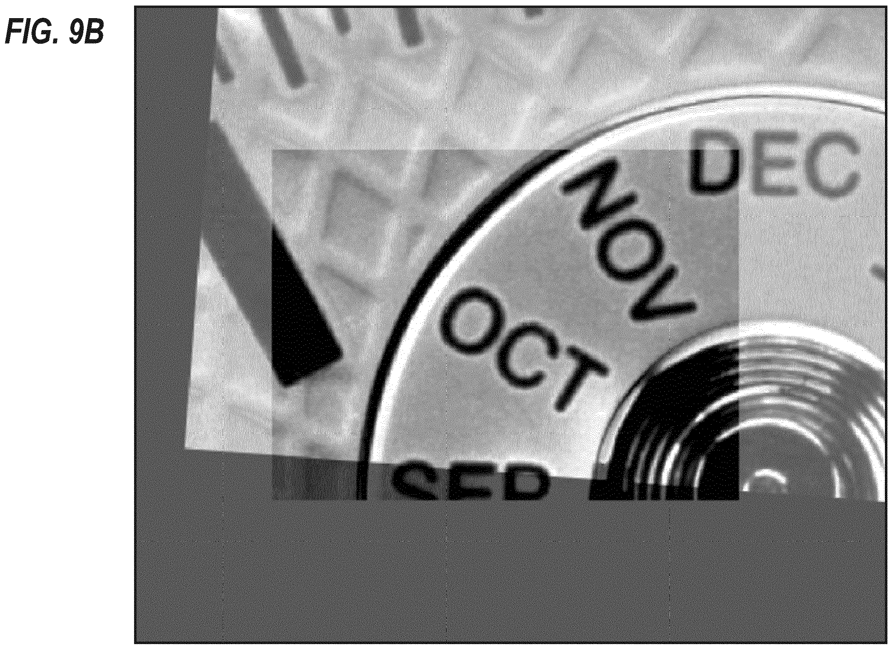

Transforming the significant points as opposed to the raw image data means that less data is processed. However, for the purpose of better understanding the invention, it is useful to point out that the same transformation that brings the reference points and the check points to a common frame of reference can be used to bring the reference and the check images into alignment, as shown in Fig. 9 B, where the transformation has been applied to the coordinates of each individual pixel in the check image shown in Fig. 9A to align the images.

In other words, figure 9A shows the superposition of two images when the images are not aligned, and Figure 9B shows the superposition of two images after they have been aligned through defining a common co-ordinate system and transforming the check image and the reference image into the common co-ordinate system for example by rotating and translating the check image.

After having referred the significant points to a common co-ordinate system, the significant points in the two lists are then used to establish a degree of correspondence between the two images and hence the degree of correspondence of the two objects represented in the images. It can therefore be determined if the two objects are the same and hence the authenticity of the object being checked can be determined.

A score or a function or a merit function is defined to determine the degree of correspondence between couples of points in the two lists. A predefined threshold is determined which sets a boundary for determining if the score or output of the function or merit function indicates that the product is authentic. The threshold may vary between products, for example between different models of watches. The threshold may be established by carrying out tests on authentic and unauthentic products of a particular product.

The function is, in one example, the root-mean-square residual distance between the matching pairs in the two lists in the common co-ordinate system. In another example, the function is the root-mean-square residual distance between the matching pairs in the two lists, subject to the constraint that only matching pairs that are closer than a given distance are considered, for example closer than 1 pixel, or closer than 2 pixels, etc.

In another example, the function is the root-mean-square residual distance between each point in the reference list and the point in the check list that is closest to it in space, in other words the nearest neighbouring points. In yet another example, the function is the root-mean-square residual distance between each point in the reference list and the point in the check list that is closest to it in space, in other words the nearest neighbouring points, subject to the constraint that only couples of points that are closer than a given distance are considered, for example closer than 1 pixel, or closer than 2 pixels.

In yet another example, the function is the root-mean-square residual distance between each point in the reference list and the point in the check list that is closest to it in space, in other words the nearest neighbouring points, subject to the constraint that only couples of points whose descriptors have a degree of similarity larger than a prescribed threshold are considered.

In yet another example, the function is defined as the fraction of matching points to the total number of points in the one of the two lists, for example, 300 matching points out of 1000 points in the reference list (30%). If 30% or more of the points match then the product may be deemed authentic.

A region around each significant point in the check list or each significant point in the reference list may be examined to determine whether or not there is another significant point in its vicinity from the other list of significant points after the significant points from the two lists have been aligned to a common co-ordinate system. This may be performed for each significant point in the check list or in the reference list regardless of whether or not a significant point has been previously deemed to match a point in the other list. For example, for each significant point in the check list or in the reference list, a circular region of a particular radius, for example one pixel or $25\mu$m, centred on the significant point may be examined to determine if there is a significant point from the other list within this circular region.

Figure 10 shows sample significant points of the check image, the centres of which are marked with a cross, and which are indicated by reference numbers $T_1$ to $T_7$. Figure 10 also shows sample significant points of the reference image, the centres of which are marked with a cross, and which are indicated by reference numbers $R_1$ to $R_6$. The significant points of the check image and the reference image have already been aligned in the common co-ordinate system. For each significant point in the check image, $T_1$ to $T_7$, a radius (r) around each point is considered, to determine whether or not there is a significant point from the reference image within that radius. For point $T_1$, there is a significant point, $R_1$, within the radius (r). For point $T_2$, there are no significant points from the reference image within the radius (r). For point $T_3$, there are a plurality of significant points, $R_5$ and $R_6$, within the radius (r). Having considered a radius (r) around each of the significant points of the check image $T_1$ to $T_7$, the total number of significant points of the check image which have one or more significant points within a radius (r) of a point is determined. This calculation may be performed separately for each of the sub-regions. The results may then combined to determine a ratio of the total number of significant points of the of the check image which have one or more significant points within the radius (r) to (a) the total number of significant points of the check image or to (b) the total number of significant points of the reference image for the compared images or for a region of interest of the compared images. The ratio (a) or (b) may be selected based on whichever of the two lists of significant points is shorter. This ratio is used to determine whether or not the two products are the same. If the two products are the same then the ratio will be higher. If the two products are not the same then the ratio will be lower. The exact threshold value of the ratio for determining the authenticity of the product will vary depending on the exact nature of the product being compared.

For one particular model, comparing the check image of the watch with the reference image of the same individual watch it has been found that the threshold value of the ratio will be around 20%. For another model it has been found that the threshold value of the ratio will be 40%. For yet another individual watch, the threshold value is 50%. When two different genuine watches of the same model are compared, the ratio or percentage is significantly lower than the threshold value, for example between 5 and 10%. For a counterfeit watch and a genuine watch of the same intended model, the ratio may be only 1 to 2%. The threshold value for determining the authenticity of the product will vary between products. It will depend on the complexity of the imaged details of the product. The threshold values for each product will need to be calibrated and determined for a particular model.

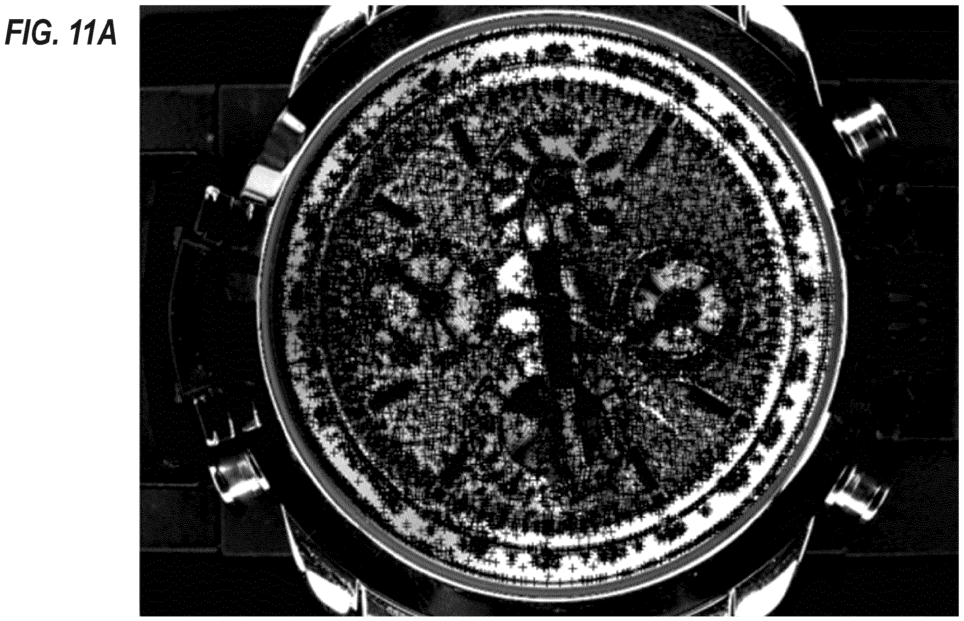

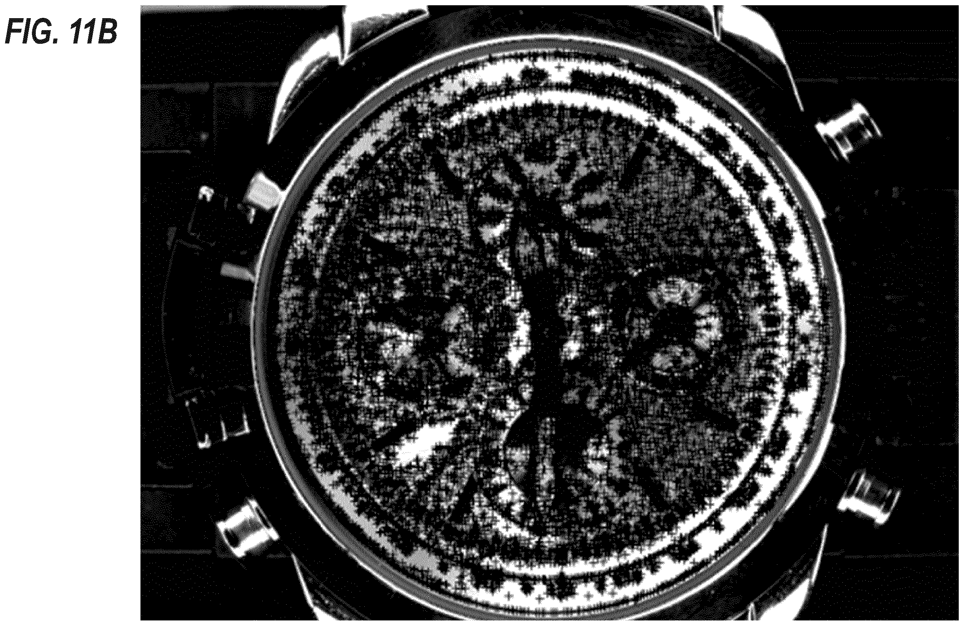

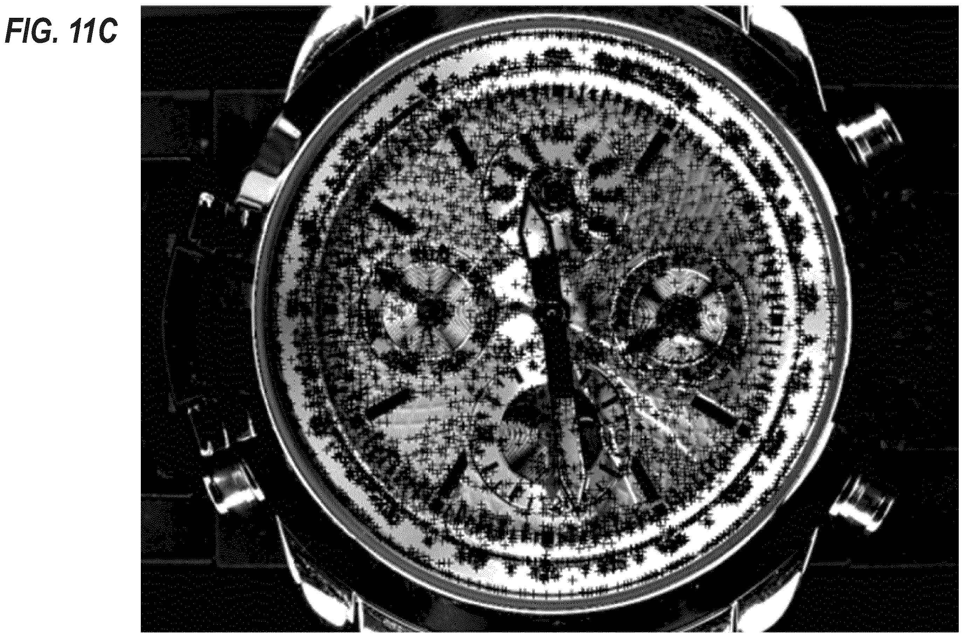

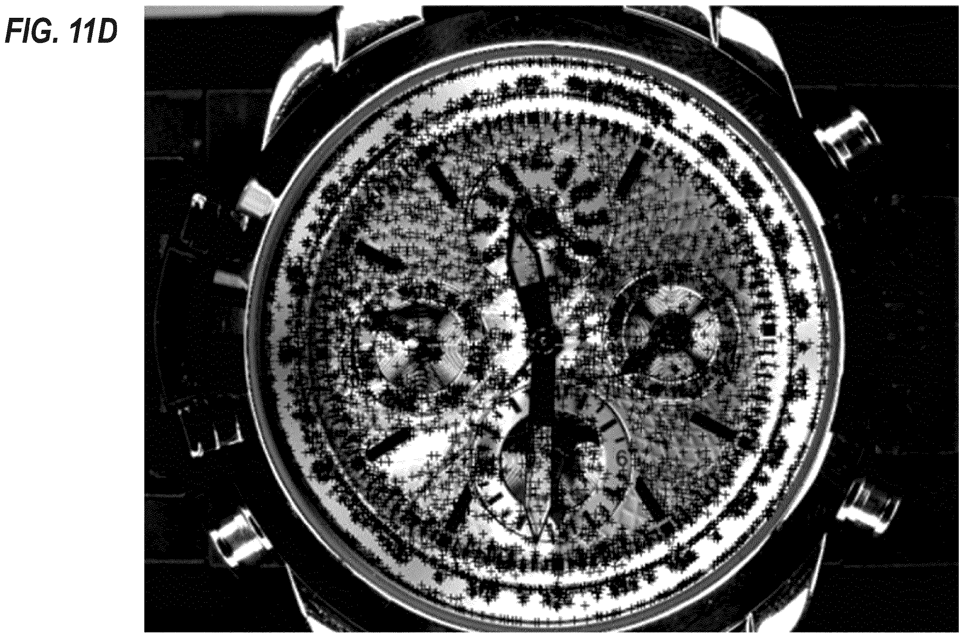

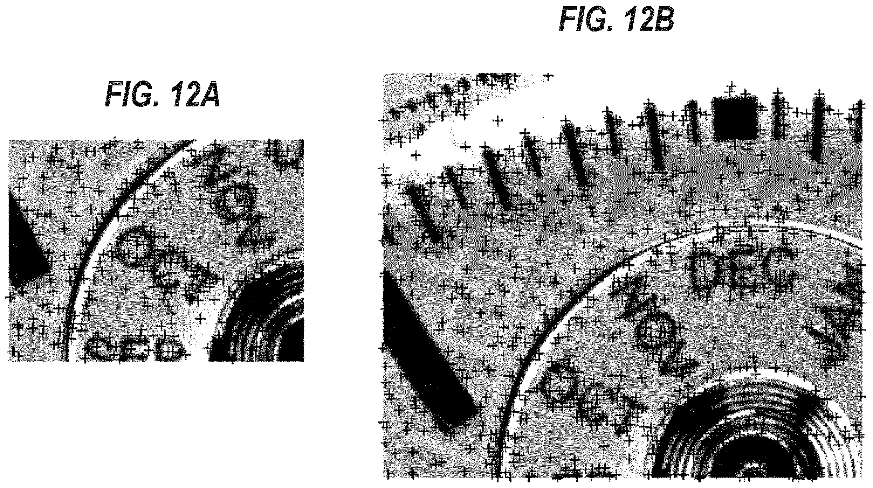

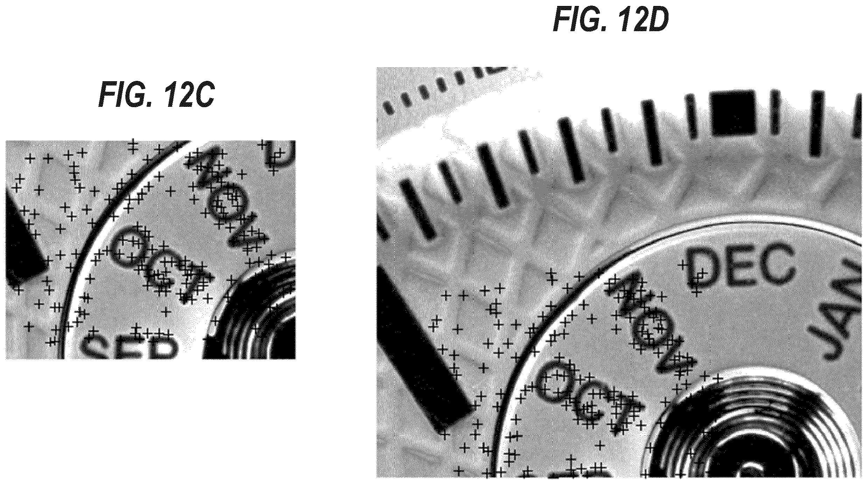

Figures 11A to 11D show significant points and significant points that are closer than two pixels for a reference image and for a check image to be compared with the reference image after the significant points have been referred to a common co-ordinate system. Figure 11A illustrates the significant points determined for the reference image and Figure 11B illustrates the significant points determined for the check image. Figure 11C shows the significant points of the reference image which are closer than two pixels to a significant point of the check image in the common co-ordinate system. In Figures 11 and 11D, all points are retained that are closer than two pixels, regardless of their descriptor. Figure 11D shows the significant points of the check image which are closer than two pixels to a significant point of the reference image in the common co-ordinate system. Figure 12A to 12D illustrate zoomed in versions of part of the images shown in Figures 11A to 11D respectively to illustrate the comparison process.

It is clear that the above-mentioned examples are not meant to be exhaustive, and that other functions can be used, including functions that combine two or more of the above-mentioned criteria.

Based on the function, an answer is output by the computer and conveyed to a user concerning the degree of correspondence between the two images and hence the degree of correspondence of the two objects represented in the images. This answer may the output of the function itself, or it may be a simple yes/no if the function is above/below a prescribed value, or it could be a more complex answer, for example conveying the ratio and the rms distance between matching points.

The answer may be calculated locally to the imaging apparatus 2 and sent to a verification station which may be the central server. The answer may be calculated at a remote server and conveyed to a user local to the imaging apparatus 2.

It may be necessary or desirable to capture an image of the genuine product as a new reference image against which later check images can be compared. For example, if a product is repaired then details of the product may change slightly. After the repair, the product can be imaged using the imaging apparatus 2 and the image data stored as a reference for authenticating the product at a later date. It is especially helpful to store the raw image data so that analyses can be performed on the data at a later date.

## Claims

1. A method of authenticating a product, comprising:

   capturing an image of a product to be authenticated;
   determining a plurality of reference points ($T_1$, ..., $T_7$) of the captured image;
   comparing the plurality of reference points of the captured image of the product to be authenticated with a plurality of reference points ($R_1$,...,$R_6$) of a previously captured reference image of a genuine product;
   **characterized by** further comprising aligning a plurality of said reference points of the image of the product to be authenticated with a plurality of said reference points of the image of the genuine product prior to comparing the reference points,
   wherein the reference points ($T_1$, ..., $T_7$) of the captured image are parts of the product with distinctive characteristics that make the reference points recognizable under partial degradation of the image;
   wherein comparing the plurality of reference points of the image of the product to be authenticated with the plurality of reference points of the image of the genuine product comprises determining if a reference point of the plurality of reference points of the image of the product to be authenticated is within a defined distance of a reference point of the plurality of reference points of the image of the genuine product; and
   determining a total number of reference points of the image of the product to be authenticated which are within said defined distance of a reference point of the image of the genuine product within a region of the image;
   determining a ratio of said total number of reference points of the image of the product to be authenticated which are within said defined distance to the total number of reference points in the image; and
   authenticating the product if the ratio is above a predetermined threshold value.

2. The method of claim 1, wherein aligning the reference points comprises determining two or more matching pairs between the plurality of reference points of the image of the product to be authenticated and the plurality of reference points of the image of the genuine product and using the two or more matching pairs to determine a transformation for aligning the reference points.

3. The method of claim 2, wherein each of the reference points of the image of the product to be authenticated and the reference points of the image of the genuine product comprises a descriptor, and wherein determining two or more matching pairs comprises comparing the descriptors of the plurality of reference points of the image of the product to be authenticated and the plurality of reference points of the image of the genuine product.

4. The method of claims- 2 or claim 3, further comprising dividing the image of the product to be authenticated into a plurality of sub-regions, and aligning the plurality of reference points of the image of the product to be authenticated and the plurality of reference points of the reference image of the genuine product separately for the sub-regions.

5. The method of claim 4, comprising determining a plurality of reference points of the image of the product to be authenticated prior to determining the sub-regions for assisting the determination of the sub-regions.

6. The method of any of the preceding claims, wherein comparing the plurality of reference points of the image of the product to be authenticated with the plurality of reference points of the image of the genuine product comprises determining if a reference point of the plurality of reference points of the image of the product to be authenticated is within a defined distance of a reference point of the plurality of reference points of the image of the genuine product for at least some of the reference points of the image of the product to be authenticated or for at least some of the reference points of the image of the genuine product within a region of the image.

7. The method of claim 6, further comprising applying a function to the total number to determine an output for comparison with a threshold value to determine the authenticity of the product.

8. The method of claim 7, wherein the function comprises dividing the total number by the total number of reference points of the image of the product to be authenticated within the region of the image or by the total number of reference points of the image of the genuine product within the region of the image to determine a ratio.

9. The method of any of the preceding claims, wherein the product is a timepiece.

10. The method of any of the preceding claims, wherein the captured image is a first image, and further comprising capturing a second image of the product for creating a composite image based on the first image and the second image for comparison with a reference image of a genuine product for authenticating the product.

11. The method of claim 10, wherein the step of capturing the first image of the product is carried out when the product is illuminated from a first direction and wherein the step of capturing the second image of the product is carried out when the product is illuminated from a second direction, wherein the second direction is different to the first direction.

12. The method of claim 10 or claim 11, wherein the step of capturing the first image is carried out at a first exposure time, and wherein the step of capturing the second image is carried out at a second exposure time, wherein the first exposure time is different to the second exposure time.

13. The method of any of claims 10 to 12, further comprising receiving imaging instructions comprising the conditions for capturing the image or images of the product to be authenticated, and capturing the image or images of the product according to the instructions.

14. The method of claim 13, wherein the imaging instructions convey substantially similar or the same conditions under which the reference image or images of a genuine product were captured at an earlier point in time so that the product to be authenticated can be imaged under substantially similar or the same conditions as the genuine product.

**Patentansprüche**

1. Ein Verfahren zum Authentifizieren eines Produkts, umfassend:

   Aufnehmen eines Bildes von einem zu authentifizierenden Produkt;
   Bestimmen einer Vielzahl von Referenzpunkten ($T_1$,...,$T_7$) des aufgenommenen Bildes;
   Vergleichen der Vielzahl von Referenzpunkten des aufgenommenen Bildes des zu authentifizierenden Produkts mit einer Vielzahl von Referenzpunkten ($R_1$,...,$R_6$) eines vorher aufgenommenen Referenzbildes eines echten Produkts;
   **dadurch gekennzeichnet, dass** das Verfahren ferner Ausrichten einer Vielzahl der genannten Referenzpunkte des Bildes des zu authentifizierenden Produkts mit einer Vielzahl der genannten Referenzpunkte des Bildes des echten Produkts vor dem Vergleichen der Referenzpunkte umfasst,
   wobei die Referenzpunkte ($T_1$,...,$T_7$) des aufgenommenen Bildes Teile des Produkts mit Unterscheidungsmerkmalen sind, die die Referenzpunkte unter teilweiser Verschlechterung des Bildes erkennbar machen;
   wobei das Vergleichen der Vielzahl von Referenzpunkten des Bildes des zu authentifizierenden Produkts mit der Vielzahl von Referenzpunkten des Bildes des echten Produkts das Bestimmen umfasst, ob ein Referenzpunkt der Vielzahl von Referenzpunkten des Bildes des zu authentifizierenden Produkts innerhalb eines festgelegten Abstands eines Referenzpunktes der Vielzahl von Referenzpunkten des Bildes des echten Produkts liegt; und
   Bestimmen einer Gesamtzahl von Referenzpunkten des Bildes des zu authentifizierenden Produkts, die innerhalb des genannten festgelegten Abstands eines Referenzpunktes des Bildes des echten Produkts innerhalb eines Bereichs des Bildes liegen;
   Bestimmen eines Verhältnisses der Gesamtzahl von innerhalb des genannten festgelegten Abstands liegenden Referenzpunkten des Bildes des zu authentifizierenden Produkts zu der Gesamtzahl von Referenzpunkten im Bild; und
   Authentifizieren des Produkts, wenn das Verhältnis über einem vorgegebenen Schwellenwert liegt.

2. Das Verfahren nach Anspruch 1, wobei das Ausrichten der Referenzpunkte das Bestimmen von zwei oder mehr übereinstimmenden Paaren zwischen der Vielzahl von Referenzpunkten des Bildes des zu authentifizierenden Produkts und der Vielzahl von Referenzpunkten des Bildes des echten Produkts und das Verwenden der zwei oder mehr übereinstimmenden Paare zum Bestimmen einer Transformation zum Ausrichten der Referenzpunkte umfasst.

**3.** Das Verfahren nach Anspruch 2, wobei jeder der Referenzpunkte des Bildes des zu authentifizierenden Produkts und der Referenzpunkte des Bildes des echten Produkts einen Deskriptor umfasst, und wobei das Bestimmen von zwei oder mehr übereinstimmenden Paaren das Vergleichen der Deskriptoren der Vielzahl von Referenzpunkten des Bildes des zu authentifizierenden Produkts und der Vielzahl von Referenzpunkten des Bildes des echten Produkts umfasst.

**4.** Das Verfahren nach Anspruch 2 oder Anspruch 3, ferner umfassend das Unterteilen des Bildes des zu authentifizierenden Produkts in eine Vielzahl von Unterbereichen und das Ausrichten der Vielzahl von Referenzpunkten des Bildes des zu authentifizierenden Produkts und der Vielzahl von Referenzpunkten des Referenzbildes des echten Produkts getrennt für die Unterbereiche.

**5.** Das Verfahren nach Anspruch 4, umfassend das Bestimmen einer Vielzahl von Referenzpunkten des Bildes des zu authentifizierenden Produkts vor dem Bestimmen der Unterbereiche, um das Bestimmen der Unterbereiche zu fördern.

**6.** Das Verfahren nach einer der vorhergehenden Ansprüche, wobei das Vergleichen der Vielzahl von Referenzpunkten des Bildes des zu authentifizierenden Produkts mit der Vielzahl von Referenzpunkten des Bildes des echten Produkts das Bestimmen umfasst, ob ein Referenzpunkt der Vielzahl von Referenzpunkten des Bildes des zu authentifizierenden Produkts innerhalb eines festgelegten Abstands eines Referenzpunktes der Vielzahl von Referenzpunkten des Bildes des echten Produkts für mindestens einige der Referenzpunkte des Bildes des zu authentifizierenden Produkts oder für mindestens einige der Referenzpunkte des Bildes des echten Produkts innerhalb eines Bereiches des Bildes liegt.

**7.** Das Verfahren nach Anspruch 6, ferner umfassend das Anwenden einer Funktion auf die Gesamtzahl, um eine Ausgabe zum Vergleichen mit einem Schwellenwert zum Bestimmen der Authentizität des Produkts zu bestimmen.

**8.** Das Verfahren nach Anspruch 7, wobei die Funktion das Teilen der Gesamtzahl durch die Gesamtzahl der Referenzpunkte des Bildes des zu authentifizierenden Produkts innerhalb des Bereiches des Bildes oder durch die Gesamtzahl der Referenzpunkte des Bildes des echten Produkts innerhalb des Bereiches des Bildes umfasst, damit ein Verhältnis bestimmt wird.

**9.** Das Verfahren nach einem der vorhergehenden Ansprüche, wobei das Produkt eine Uhr ist.

**10.** Das Verfahren nach einem der vorhergehenden Ansprüche, wobei das aufgenommene Bild ein erstes Bild ist, und ferner umfassend das Aufnehmen eines zweiten Bildes des Produkts zum Erzeugen eines zusammengesetzten Bildes auf der Basis des ersten Bildes und des zweiten Bildes zum Vergleichen mit einem Referenzbild eines echten Produkts zum Authentifizieren des Produkts.

**11.** Das Verfahren nach Anspruch 10, wobei der Schritt des Aufnehmens des ersten Bildes des Produkts ausgeführt wird, wenn das Produkt aus einer ersten Richtung beleuchtet wird, und wobei der Schritt des Aufnehmens des zweiten Bildes des Produkts ausgeführt wird, wenn das Produkt aus einer zweiten Richtung beleuchtet wird, wobei die zweite Richtung sich von der ersten Richtung unterscheidet.

**12.** Das Verfahren nach Anspruch 10 oder 11, wobei der Schritt des Aufnehmens des ersten Bildes bei einer ersten Belichtungszeit ausgeführt wird, und wobei der Schritt des Aufnehmens des zweiten Bildes bei einer zweiten Belichtungszeit ausgeführt wird, wobei die erste Belichtungszeit sich von der zweiten Belichtungszeit unterscheidet.

**13.** Das Verfahren nach einem der Ansprüche 10 bis 12, ferner umfassend das Empfangen von Abbildungsanweisungen, die die Bedingungen für das Aufnehmen des Bildes oder der Bilder des zu authentifizierenden Produkts aufweisen, und das Aufnehmen des Bildes oder der Bilder des Produkts gemäß den Anweisungen.

**14.** Das Verfahren nach Anspruch 13, wobei die Abbildungsanweisungen im Wesentlichen ähnliche oder gleiche Bedingungen vermitteln, unter denen das Referenzbild oder die Referenzbilder eines echten Produkts zu einem früheren Zeitpunkt aufgenommen wurden, so dass das zu authentifizierende Produkt unter im Wesentlichen ähnlichen oder gleichen Bedingungen wie das echte Produkt abgebildet werden kann.

**Revendications**

1. Procédé d'authentification d'un produit, comprenant :

la capture d'une image d'un produit à authentifier;
la détermination d'une pluralité de points de référence ($T_1$, ...,$T_7$) de l'image capturée ;
la comparaison de la pluralité de points de référence de l'image capturée du produit à authentifier à une pluralité de points de référence ($R_1$, ...,$R_6$) d'une image de référence capturée précédemment d'un produit authentique ; **caractérisé en ce qu'**il comprend en outre l'alignement d'une pluralité desdits points de référence de l'image du produit à authentifier avec une pluralité desdits points de référence de l'image du produit authentique avant la comparaison des points de référence,
dans lequel les points de référence ($T_1$, ...,$T_7$) de l'image capturée sont des parties du produit avec des caractéristiques distinctives qui rendent les points de référence reconnaissables dans une dégradation partielle de l'image ;
dans lequel la comparaison de la pluralité de points de référence de l'image du produit à authentifier à la pluralité de points de référence de l'image du produit authentique comprend la détermination du fait qu'un point de référence de la pluralité de points de référence de l'image du produit à authentifier se trouve ou non dans une distance définie par rapport à un point de référence de la pluralité de points de référence de l'image du produit authentique ; et
la détermination d'un nombre total de points de référence de l'image du produit à authentifier qui se trouvent dans ladite distance définie par rapport à un point de référence de l'image du produit authentique au sein d'une région de l'image ;
la détermination d'un rapport entre ledit nombre total de points de référence de l'image du produit à authentifier qui se trouvent dans ladite distance définie et le nombre total de points de référence dans l'image ; et
l'authentification du produit si le rapport est supérieur à une valeur seuil prédéterminée.

2. Procédé selon la revendication 1, dans lequel l'alignement des points de référence comprend la détermination de deux paires de concordances ou plus entre la pluralité de points de référence de l'image du produit à authentifier et la pluralité de points de référence de l'image du produit authentique et l'utilisation des deux paires de concordances ou plus pour déterminer une transformation pour l'alignement des points de référence.

3. Procédé selon la revendication 2, dans lequel chacun des points de référence de l'image du produit à authentifier et des points de référence de l'image du produit authentique comprend un descripteur, et dans lequel la détermination de deux paires de concordances ou plus comprend la comparaison des descripteurs de la pluralité de points de référence de l'image du produit à authentifier et de la pluralité de points de référence de l'image du produit authentique.

4. Procédé selon la revendication 2 ou la revendication 3, comprenant en outre la division de l'image du produit à authentifier en une pluralité de sous-régions, et l'alignement de la pluralité de points de référence de l'image du produit à authentifier et de la pluralité de points de référence de l'image de référence du produit authentique séparément pour les sous-régions.

5. Procédé selon la revendication 4, comprenant la détermination d'une pluralité de points de référence de l'image du produit à authentifier avant la détermination des sous-régions pour faciliter la détermination des sous-régions.

6. Procédé selon l'une quelconque des revendications précédentes, dans lequel la comparaison de la pluralité de points de référence de l'image du produit à authentifier à la pluralité de points de référence de l'image du produit authentique comprend la détermination du fait qu'un point de référence de la pluralité de points de référence de l'image du produit à authentifier se trouve ou non dans une distance définie par rapport à un point de référence de la pluralité de points de référence de l'image du produit authentique pour au moins certains des points de référence de l'image du produit à authentifier ou pour au moins certains des points de référence de l'image du produit authentique au sein d'une région de l'image.

7. Procédé selon la revendication 6, comprenant en outre l'application d'une fonction au nombre total pour déterminer une sortie pour une comparaison à une valeur seuil afin de déterminer l'authenticité du produit.

8. Procédé selon la revendication 7, dans lequel la fonction comprend la division du nombre total par le nombre total de points de référence de l'image du produit à authentifier au sein de la région de l'image ou par le nombre total de points de référence de l'image du produit authentique au sein de la région de l'image pour déterminer un rapport.

**9.** Procédé selon l'une quelconque des revendications précédentes, dans lequel le produit est une pièce d'horlogerie.

**10.** Procédé selon l'une quelconque des revendications précédentes, dans lequel l'image capturée est une première image, et comprenant en outre la capture d'une seconde image du produit pour créer une image composite basée sur la première image et la seconde image pour une comparaison à une image de référence d'un produit authentique afin d'authentifier le produit.

**11.** Procédé selon la revendication 10, dans lequel l'étape de capture de la première image du produit est réalisée lorsque le produit est illuminé depuis une première direction et dans lequel l'étape de capture de la seconde image du produit est réalisée lorsque le produit est illuminé depuis une seconde direction, dans lequel la seconde direction est différente de la première direction.

**12.** Procédé selon la revendication 10 ou la revendication 11, dans lequel l'étape de capture de la première image est réalisée à un premier temps d'exposition, et dans lequel l'étape de capture de la seconde image est réalisée à un second temps d'exposition, dans lequel le premier temps d'exposition est différent du second temps d'exposition.

**13.** Procédé selon l'une quelconque des revendications 10 à 12, comprenant en outre la réception d'instructions d'imagerie comprenant les conditions pour la capture de l'image ou d'images du produit à authentifier, et la capture de l'image ou d'images du produit selon les instructions.

**14.** Procédé selon la revendication 13, dans lequel les instructions d'imagerie communiquent des conditions sensiblement similaires ou identiques à celles dans lesquelles l'image ou les images de référence d'un produit authentique ont été capturées à un moment antérieur de sorte que le produit à authentifier peut être mis en image dans des conditions sensiblement similaires ou identiques au produit authentique.

# FIG. 1

# FIG. 2

# FIG. 7

# FIG. 10

FIG. 3A

FIG. 3B

FIG. 3C

FIG. 3D

FIG. 4A

FIG. 4B

FIG. 4C

FIG. 5A

FIG. 5B

EP 3 069 295 B1

FIG. 6A

FIG. 6B

FIG. 8A

*FIG. 8B*

FIG. 8C

*FIG. 8D*

FIG. 9A

FIG. 9B

EP 3 069 295 B1

FIG. 11A

FIG. 11B

FIG. 11C

FIG. 11D

FIG. 12B

FIG. 12A

*FIG. 12D*

*FIG. 12C*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009028424 A1
- US 2012076422 A1
- US 2013004079 A1
- EP 1143375 A2
- US 2009141984 A1
- WO 0201513 A1